# EUROPÄISCHE PATENTSCHRIFT

(11) **EP 0 796 888 B1**
(45) Veröffentlichungstag und Bekanntmachung des Hinweises auf die Patenterteilung: **14.12.2005**
(21) Anmeldenummer: 97810145.9
(22) Anmeldetag: 13.03.1997
(51) Int. Cl.: C08K 5/00, C08K 13/02, C08K 5/098, C08K 5/3435, C08K 5/138, C08L 57/08

(54) **Stabilisatorkombination für chlorhaltige Polymere**
Stabiliser composition for polymers containing chlorine
Composition de stabilisateurs pour polymères contenant du chlore

(30) Priorität: 22.03.1996 CH 75496
(43) Veröffentlichungstag der Anmeldung: 24.09.1997
(73) Patentinhaber: Wehner, Wolfgang, 64673 Zwingenberg (DE)
(72) Erfinder: Kuhn, Karl Josef, 64686 Lautertal (DE); Wehner, Wolfgang, 64673 Zwingenberg (DE); Zinke, Horst, 64385 Reichelsheim/Odw. (DE)
(74) Vertreter: Isenbruck, Günter

(56) Entgegenhaltungen:
- EP-A- 0 432 096
- WO-A-91/01348

## Beschreibung

Die Erfindung betrifft Stabilisatorkombinationen aus mindestens einer organischen Zink-Verbindung gemäß Formel I, die eine ZnO- oder ZnS-Bindung enthält, Metallverbindungen der allgemeinen Formel II und sterisch gehinderten Aminen, die sich zum Stabilisieren von organischem Material, besonders PVC, eignen.

PVC kann durch eine Reihe von Zusatzstoffen stabilisiert werden. Verbindungen des Bleis, Bariums und Cadmiums sind dafür besonders gut geeignet, sind jedoch heute aus ökologischen Gründen umstritten. (vgl. "Kunststoffadditive", Herausgeber R. Gächter und H. Müller, Carl Hanser Verlag, 3.Aufl. 1989, Seiten 303-311, und "Kunststoff Handbuch PVC", 2. Aufl. 1985, Band 2/1, W. Becker/D. Braun, Carl Hanser Verlag 1985, Seiten 531-538; sowie Kirk-Othmer: Encyclopedia of Chemical Technology 4th ed. 1994, Vol 12, "Heat Stabilizers", S. 1071-1091). Man sucht daher weiter nach wirksamen Stabilisatoren und Stabilisatorkombinationen, welche frei von Blei, Barium und Cadmium sind.

Die Verwendung von Zink- und Calciumcarboxylaten als Stabilisatorkomponenten für PVC ist bekannt. Calciumverbindungen lassen sich jedoch ganz oder teilweise durch Verbindungen des Aluminiums oder Magnesiums ersetzen, die in Kombination mit sterisch gehinderten Aminen eingesetzt werden. Es wurde somit eine Stabilisatorkombination aus
A) mindestens einer Zink-Verbindung der Formel I

   Zn (R¹ R²) (I)

   und
B) mindestens einer Metall-Verbindung der Formel II

   Me ⁿ⁺ (R³ ₐ R⁴ _{b} R⁵ _{c}) (II)
worin Me: Al oder Mg ist,
a, b und c die Werte 0, 1, 2 oder 3 annehmen,
n = a + b + c ist und n die Werte 2 oder 3 annehmen kann und mindestens ein Rest
R¹ bis R⁵ unabhängig voneinander C₁-C₂₂-Carboxylate, C₂-C₂₁-Alkenyl-CO₂-, Phenyl-CO₂-, Naphthyl-CO₂-, C₅-C₁₂-Cycloalkyl-CO₂-, C₇-C₁₈-Alkylphenyl-CO₂-, C₇-C₁₈-Alkylphenyl-O-, C₇-C₉ -Phenylalkyl-CO₂-, C₁-C₂₁-Alkyl-O-, R⁸-O-CO-[CH₂]_{P}-S- oder ein Rest der Formel R⁶-CO-CH=CR⁷-O^{⊖}- sind und Cl- oder HO- sein können, wobei der oben genannte Alkyl- oder Alkenylrest verzweigt, ein- oder mehrfach durch Sauerstoff unterbrochen oder durch eine oder mehrere OH-Gruppen substituiert sein kann, und der obengenannte Phenylrest durch eine oder mehrere Methyl-, Ethyl-, Propyl-, Butyl- und/oder OH-Gruppen substituiert sein kann R⁶ und R⁷ C₁-C₈-Alkyl-, C₁-C₈-Alkenyl-, C₅-C₈-Cycloalkyl-, Benzyl- oder Phenyl- sind, p 1 bis 6 ist,
R₈ gegebenenfalls durch Sauerstoff unterbrochenes C₄-C₂₂-Alkyl ist,
sowie
C) mindestens einem sterisch gehinderten Amin, enthaltend die Gruppe 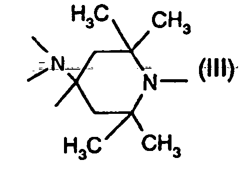 und/oder 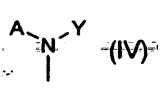 worin A und Y unabhängig voneinander C₁₋₈ -Alkyl-, C₃₋₈ Alkenyl-, C₅₋₈ -Cycloalkyl-, oder C₇₋₉ -Phenylalkyl- sind oder zusammen gegebenenfalls durch O, NH oder CH₃-N unterbrochenes C₂₋₅ -Alkylen bilden,
gefunden, die sich vorteilhaft zum Stabilisieren von chlorhaltigen Polymeren, besonders von PVC, einsetzen läßt. Sie kann auch weitere Zusätze enthalten.

Beispiele für Alkylphenyl sind Methylphenyl, Dimethylphenyl, Trimethylphenyl, Ethylphenyl, Isopropylphenyl, t-Butylphenyl, Di-t-butylphenyl oder 2,6 Di-t-butyl-4-methylphenyl.

Phenylalkyl ist im wesentlichen Benzyl aber auch Phenylethyl, 3-Phenylpropyl, alpha-Methylbenzyl oder alpha,alpha-Dimethylbenzyl.

Cycloalkyl bedeutet Cyclopentyl, -hexyl, -heptyl, -octyl oder -dodecyl.

C₁-C₂₂-Alkyl bedeutet z.B. Methyl, Ethyl, Propyl, Isopropyl, Butyl, Isobutyl, tert-Butyl, Pentyl, Hexyl, Heptyl, Octyl, Isooctyl, 2-Ethylhexyl, Nonyl, Decyl, Undecyl, Dodecyl, Tridecyl, Hexadecyl, Octadecyl, Eicosyl oder Heneicosyl .

Alkenyl bedeutet z.B, Vinyl, Allyl, Methallyl oder Hexenyl.

Zweckmäßig ist A) eine Verbindung der Formel I mit einer Zn-O-Bindung und B) eine Verbindung der Formel II, worin wenigstens ein Rest R₁ bis R₅ C₁-C₂₂ Carboxylat oder Acetylacetonat ist und die anderen Reste C₁-C₂₂ Carboxylat, Acetylacetonat oder HO- sind.

Die Verbindungen der Komponenten A) und B) sind zur Erzielung der Stabilisierung im chlorhaltigen Polymer zweckmäßig jeweils zu 0,01 bis 10, vorzugsweise zu 0,05 bis 5, insbesondere zu 0,1 bis 3 Gew.% vorhanden.

### Beispiele für Zn und Me-Verbindungen (Komponenten A und B):

### A) Zinkverbindungen

Bei den organischen Zinkverbindungen mit einer Zn-O-Bindung handelt es sich um Zinkenolate, Zinkphenolate oder/und Zinkcarboxylate. Letztere sind Verbindungen aus der Reihe der aliphatischen gesättigten und ungesättigten C₁₋₂₂-Carboxylate, der aliphatischen gesättigten oder ungesättigten C₂₋₂₂-Carboxylate, die mit wenigstens einer OH-Gruppe substituiert sind oder deren Kette wenigstens durch ein oder mehrere O-Atome unterbrochen ist (Oxasäuren), der cyclischen und bicyclischen Carboxylate mit 5-22 C-Atomen, der unsubstituierten, mit wenigstens einer OH-Gruppe substituierten und/oder

C₁-₁₆-alkylsubstituierten Phenylcarboxylate, der Phenyl-C₁-₁₆-alkylcarboxylate, oder der gegebenenfalls mit C₁₋₁₂-Alkyl substituierten Phenolate, oder der Abietinsäure. Zn-S-Verbindungen sind beispielsweise Zn-Mercaptide, Zn-Mercaptocarboxylate und Zn-Mercaptocarbonsäureester.

Namentlich zu erwähnen sind, als Beispiele, die Zinksalze der monovalenten Carbonsäuren, wie Ameisensäure, Essigsäure, Propionsäure, Buttersäure, Valeriansäure, Hexansäure, Önanthsäure, Octansäure, Neodecansäure, 2-Ethylhexansäure, Pelargonsäure, Decansäure, Undecansäure, Dodecansäure, Tridecansäure, Myristylsäure, Palmitinsäure, Laurylsäure, Isostearinsäure, Stearinsäure, 12-Hydroxystearinsäure, 9,10-Dihydroxystearinsäure, Ölsäure, Ricinolsäure, 3,6-Dioxaheptansäure, 3,6,9-Trioxadecansäure, Behensäure, Benzoesäure, p-tert-Butylbenzoesäure, Dimethylhydroxybenzoesäure, 3,5-Di-tert-butyl-4-hydroxybenzoesäure, Tolylsäure, Dimethylbenzoesäure, Ethylbenzoesäure, n-Propylbenzoesäure, Salicylsäure, p-tert-Octylsalicylsäure, und Sorbinsäure, Zimtsäure, Mandelsäure, Glykolsäure; Zinksalze der divalenten Carbonsäuren bzw. deren Monoester, wie Oxalsäure, Malonsäure, Bernsteinsäure, Glutarsäure, Adipinsäure, Fumarsäure, Pentan-1,5-dicarbonsäure, Hexan-1,6-dicarbonsäure, Heptan-1 ,7-dicarbonsäure, Octan-1 ,8-dicarbonsäure, 3,6,9-Trioxadecan-1,10-dicarbonsäure, Milchsäure, Malonsäure, Maleinsäure, Weinsäure, Äpfelsäure, Salicylsäure, Polyglykol-dicarbonsäure (n=10-12), Phthalsäure, Isophthalsäure, Terephthalsäure und Hydroxyphthalsäure; und der Di- oder Triester der tri-oder tetravalenten Carbonsäuren, wie Hemimellithsäure, Trimellithsäure, Pyromellithsäure, Zitronensäure sowie ferner sog. überbasische (overbased) Zinkcarboxylate oder Zinklaurylmercaptid, Zinkthioglykolat, Zinkthiosalicylat, Zink-bis-i-octylthioglykolat, Zinkmercaptopropionat, Zinkthiolactat, Zinkthiomalat, Zink-bisoctylmercaptopropionat, Zink-bis-isooctylthiolactat und Zink-bis-laurylthiomalat.

Bei den Zinkenolaten handelt es sich bevorzugt um Enolate des Acetylacetons, des Benzoylacetons, des Dibenzoylmethans sowie um Enolate der Acetessig- und Benzoylessigester sowie der Dehydracetsäure. Außerdem können auch anorganische Zinkverbindungen wie Zinkhydroxid, zum Einsatz kommen.

Bevorzugt sind neutrale oder basische Zinkcarboxylate einer Carbonsäure mit 1 bis 22 C-Atomen (Zinkseifen), wie beispielsweise Benzoate oder Alkanoate, bevorzugt C₈-Alkanoate, Stearat, Oleat, Laurat, Palmitat, Behenat, Versatat, Hydroxystearate und -oleate, Dihydroxystearate, p-tert-Butylbenzoat, oder (Iso)octanoat. Besonders bevorzugt sind Stearat, Oleat, Versatat, Benzoat, p-tert-Butylbenzoat und 2-Ethylhexanoat.

### B) Metallverbindungen

Neben den genannten Zink-Verbindungen enthält die erfindungsgemässe Stabilisatorkombination auch organische Aluminium- oder Magnesium Verbindungen, wobei die anionischen Reste den bei den Zinkverbindungen aufgeführten Gruppen entsprechen. Zu den bevorzugten Verbindungen dieser Art gehören Aluminium- oder Magnesiumcarboxylate wie basisches Aluminiummonostearat, basisches Aluminiumdistearat, Aluminiumtristearat, Aluminiumoctoat, Aluminium-2-ethylhexanoat, Aluminiumlaurat, basische Aluminiumacetate sowie Aluminium- oder Magnesiumenolate wie z. Bsp. Aluminiumacetylacetonat, Magnesiumacetyl- acetonat sowie Aluminium- oder Magnesiumalkoholate.

Beispiele für anorganische Verbindungen sind Aluminiumhydroxid basische Aluminiumchloride (Polyaluminiumchloride) oder, Magnesiumhydroxid.

Die beschriebenen Metallseifen bzw. deren Mischungen können in Mengen von beispielsweise 0,001 bis 10, zweckmäßig 0,01 bis 5, bevorzugt 0,01 bis 3 Gew.-Teilen, bezogen auf 100 Gew.-Teile chlorhaltiges Polymer, angewandt werden. Sie können auch als Mischsalze (Copräzipitate) vorliegen.

Beispiele für **sterisch gehinderte Amine** (Komponente C)
Bei dem sterisch gehinderten Amin handelt es sich allgemein um eine Verbindung enthaltend die Gruppe 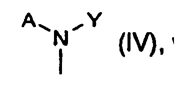 worin A und Y unabhängig voneinander C₁₋₈-Alkyl-, C₃₋₈ Alkenyl-, C₅₋₈ -Cycloalkyl-, oder C₇₋₉ -Phenylalkyl- sind, oder zusammen gegebenenfalls durch O, NH oder CH₃-N unterbrochenes C₂₋₅ -Alkylen bilden, oder um ein cyclisches sterisch gehindertes Amin, insbesondere eine Verbindung aus der Reihe der Alkyl- bzw. Polyalkylpiperidine, vor allem der Tetramethyl piperidine enthaltend die Gruppe 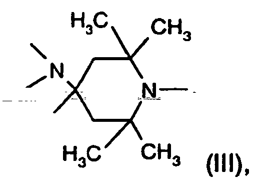 Beispiele für solche Polyalkylpiperidinverbindungen sind folgende (bei den oligomeren oder polymeren Verbindungen liegt n im Bereich 2-200, vorzugsweise im Bereich 2-10, insbesondere 3-7):
01) N,N'-Bis-(2,2,6,6-tetramethylpiperidin-4-yl)-ethylen-1,2-di-acetamid
01a) N,N'-Bis-(2,2,6,6-tetramethylpiperidin-4-yl)-hexamethylen-1,6-di-acetamid
01b) N,N'-Bis-(2,2,6,6-tetramethylpiperidin-4-yl)-ethylen-1,2-di-formamid
02) N,N'-Bis-(2,2,6,6-tetramethylpiperidin-4-yl)-adipinsäurediamid
03) N,N'-Bis-(2,2,6,6-tetramethylpiperidin-4-yl)-oxamid
04) 4-Hydroxybenzoesäureamido-2,2,6,6- tetra-methylpiperidin

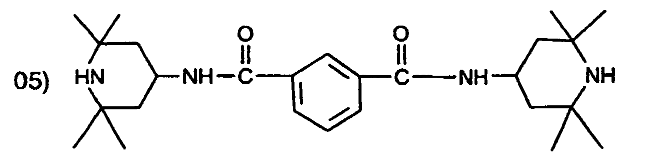

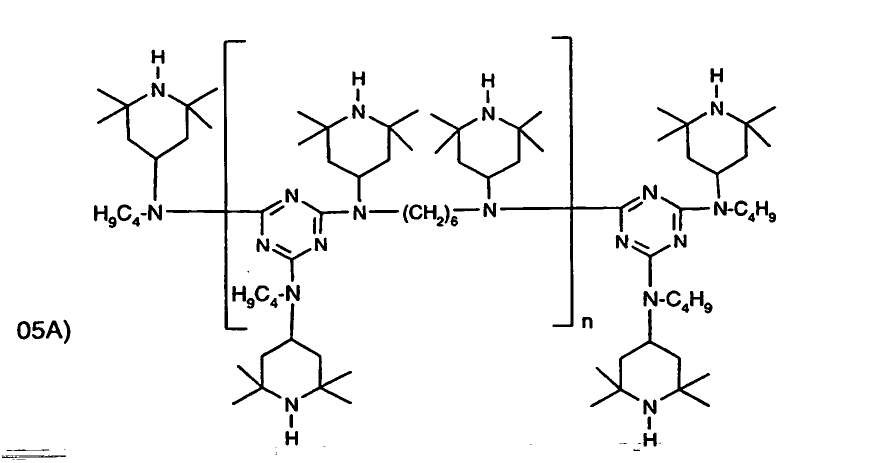

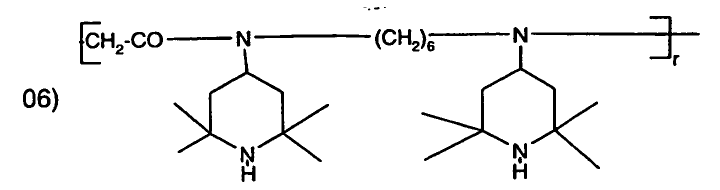

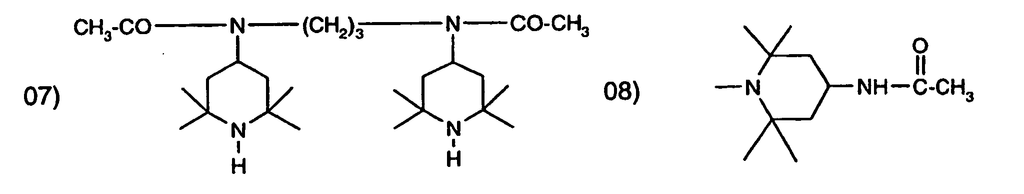

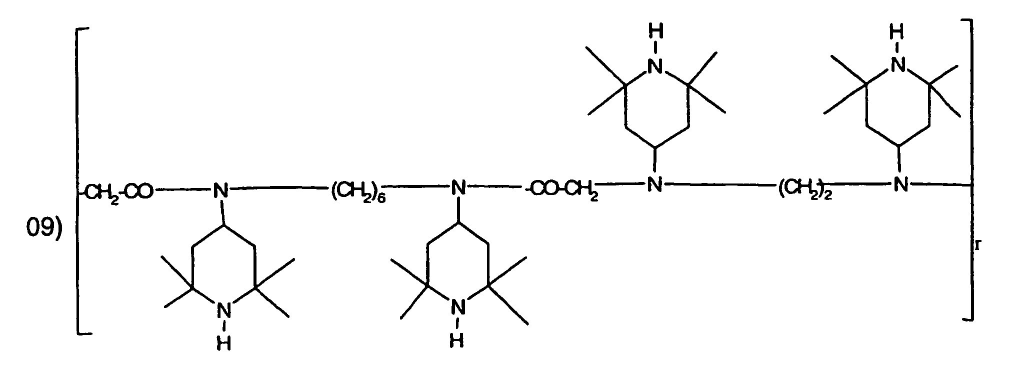

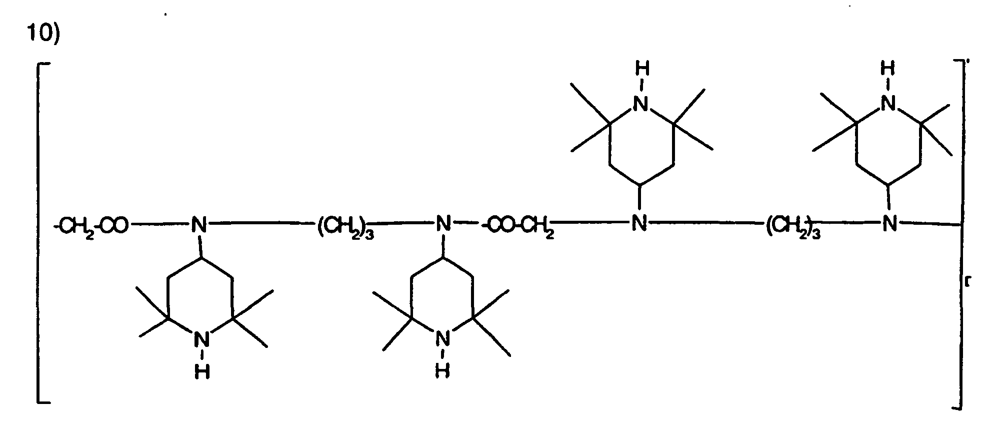

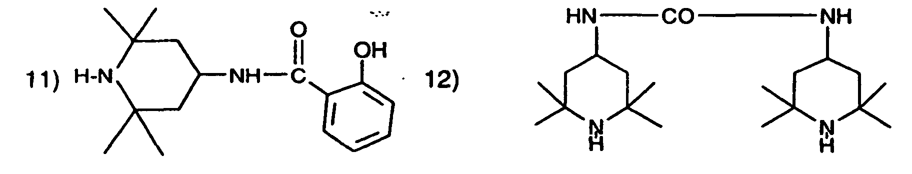

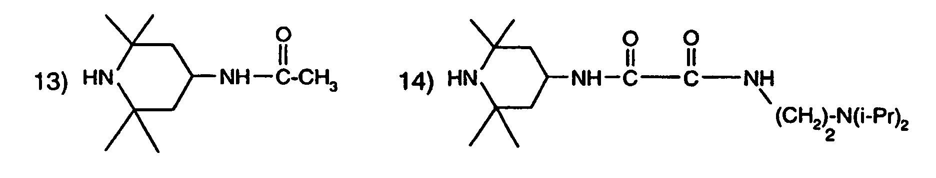

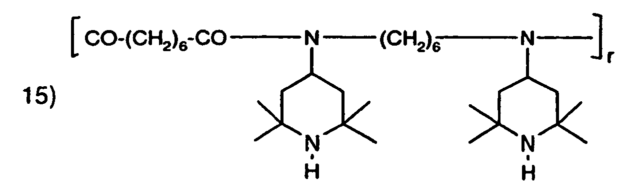

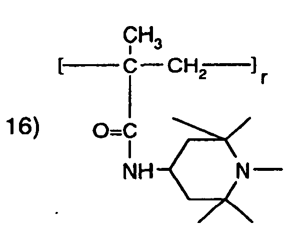

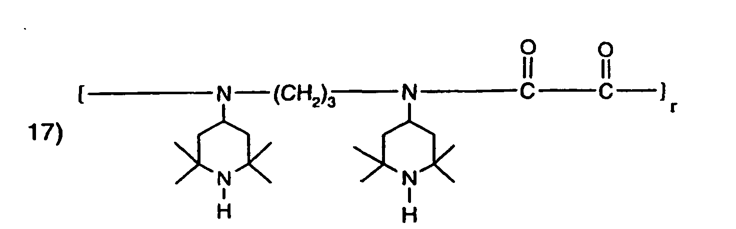

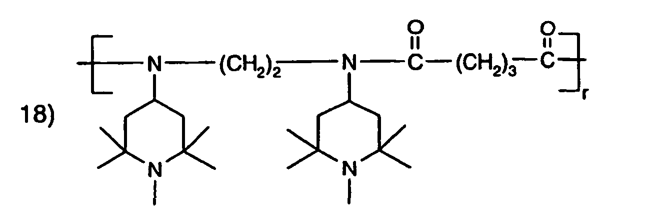

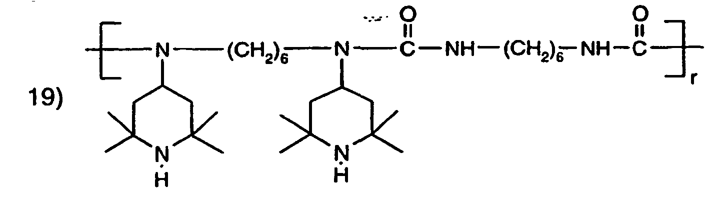

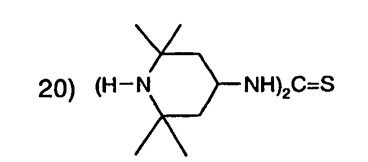

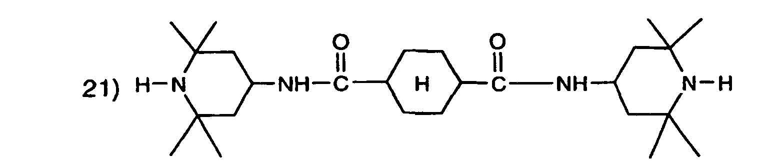

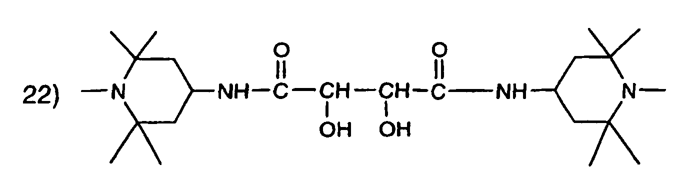

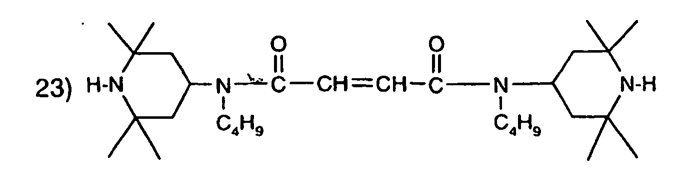

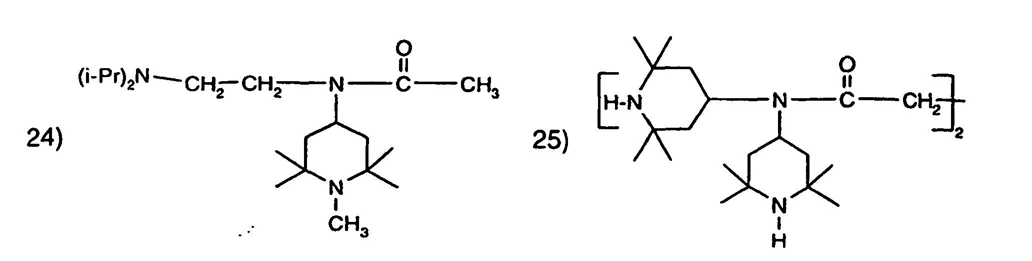

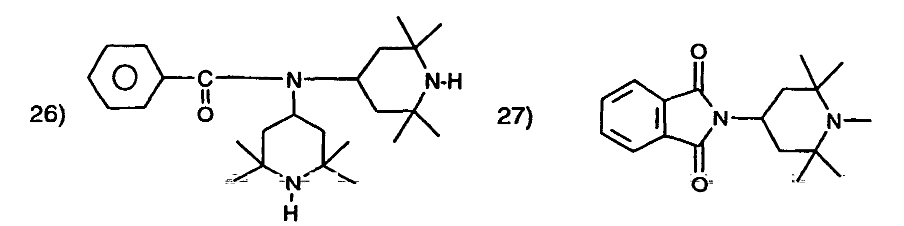

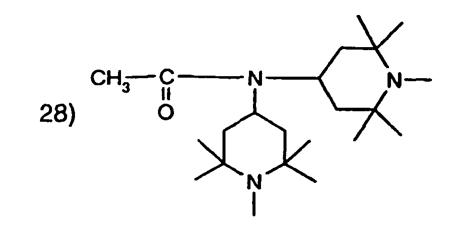

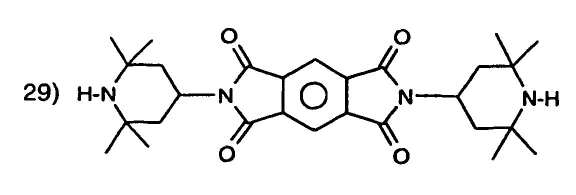

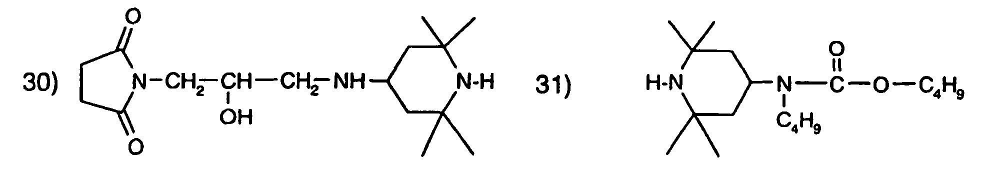

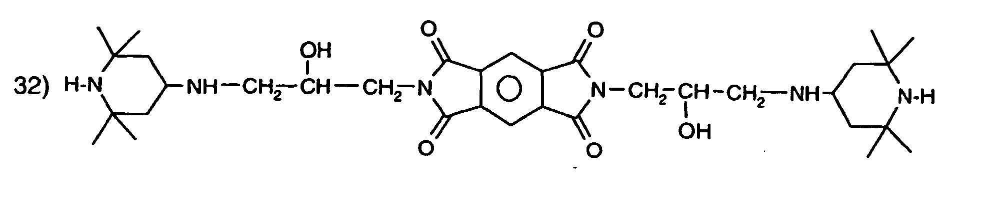

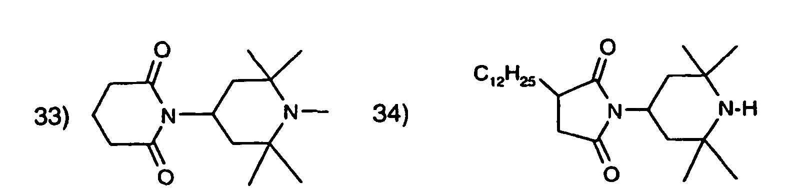

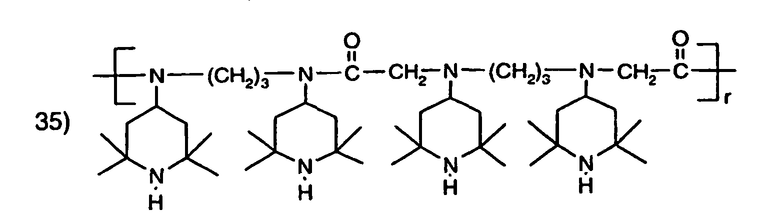

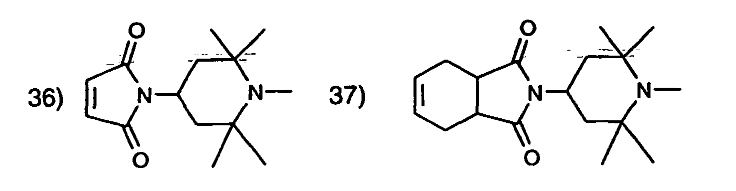

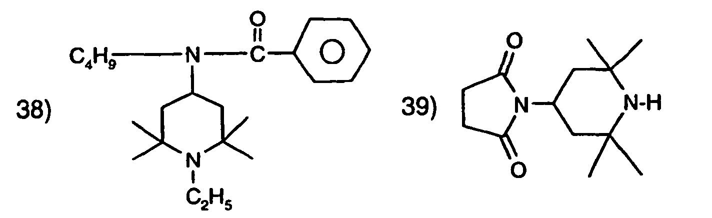

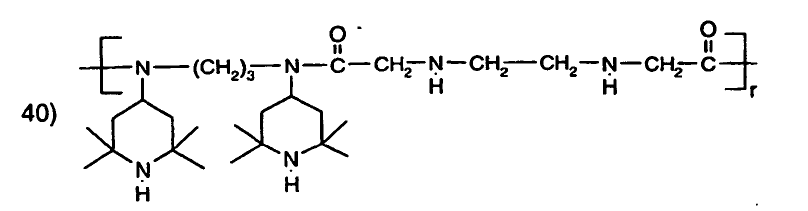

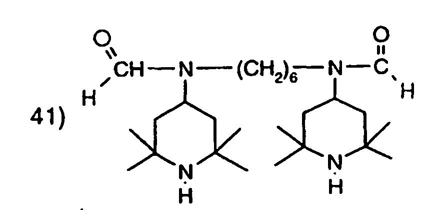

Es kommen auch Verbindungen folgender Struktur in Frage:

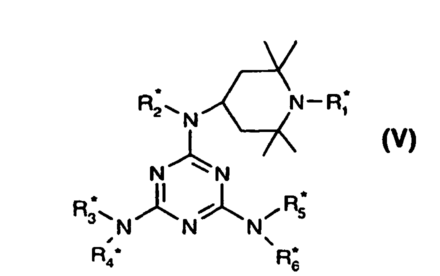

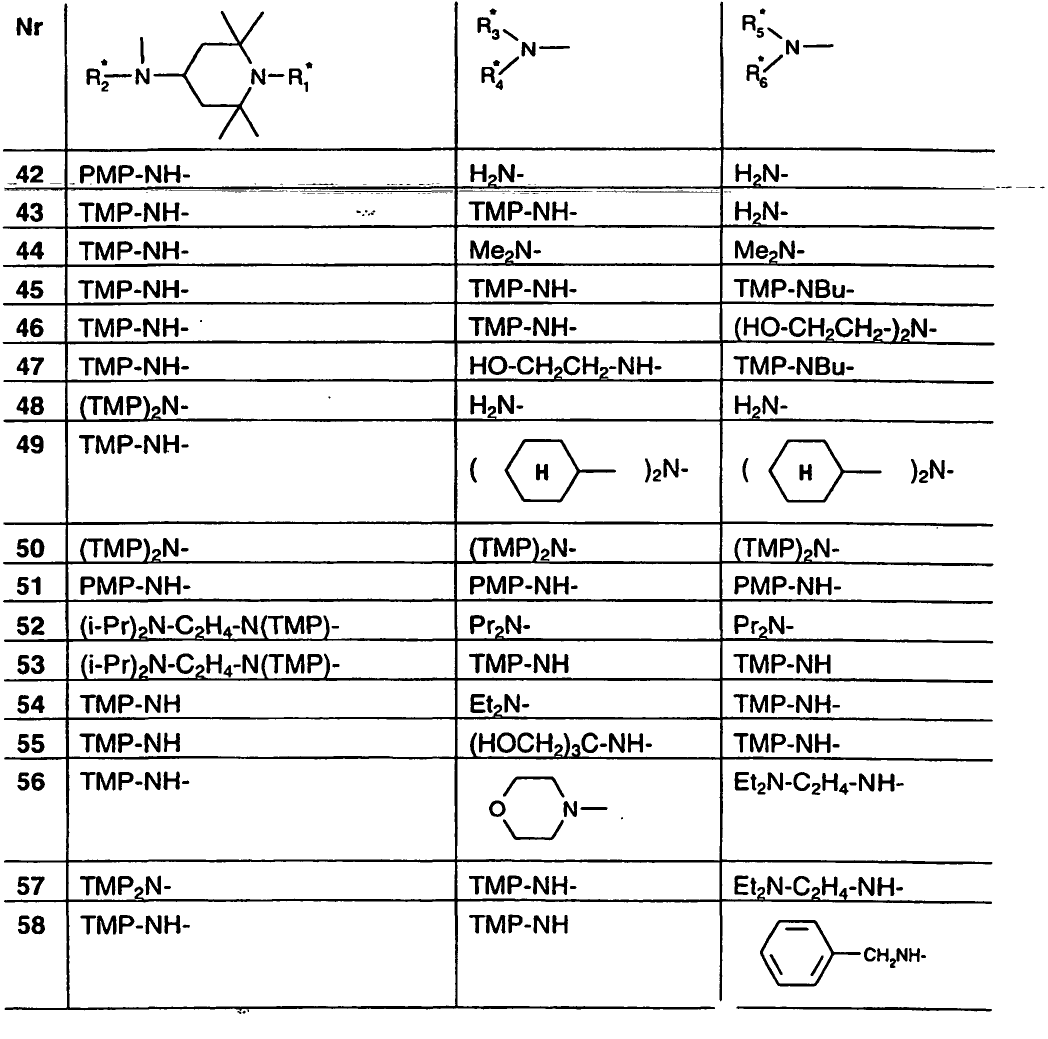

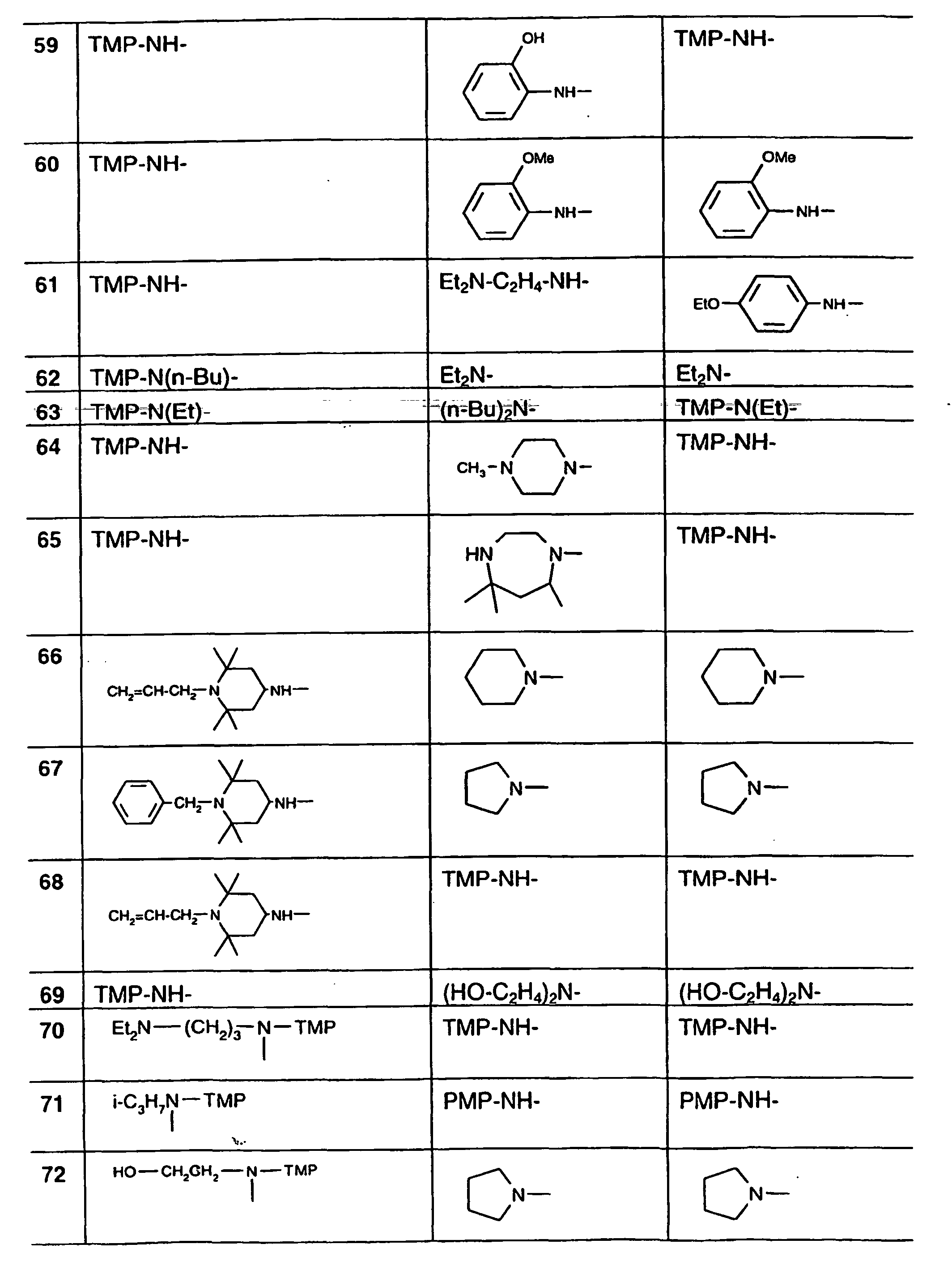

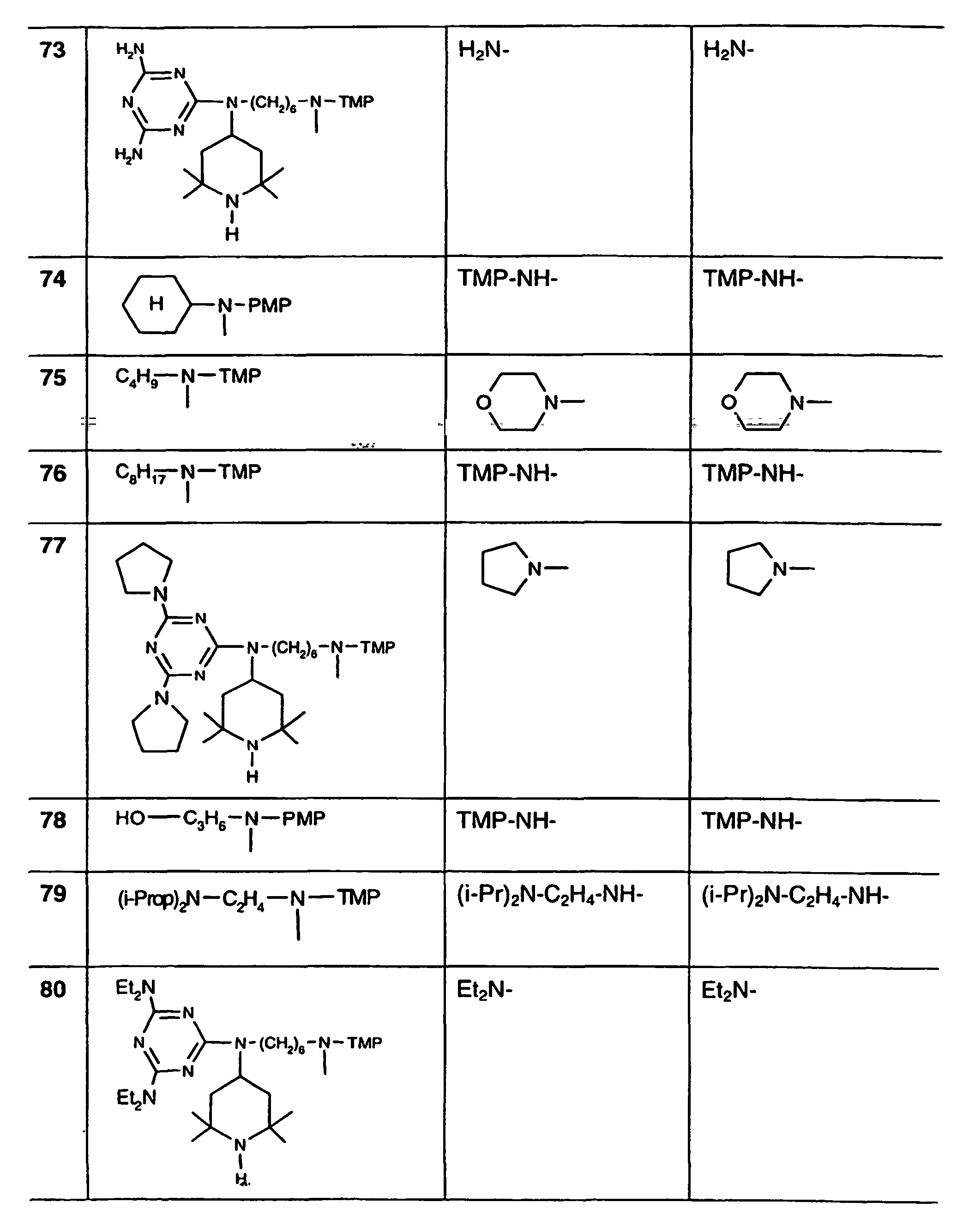

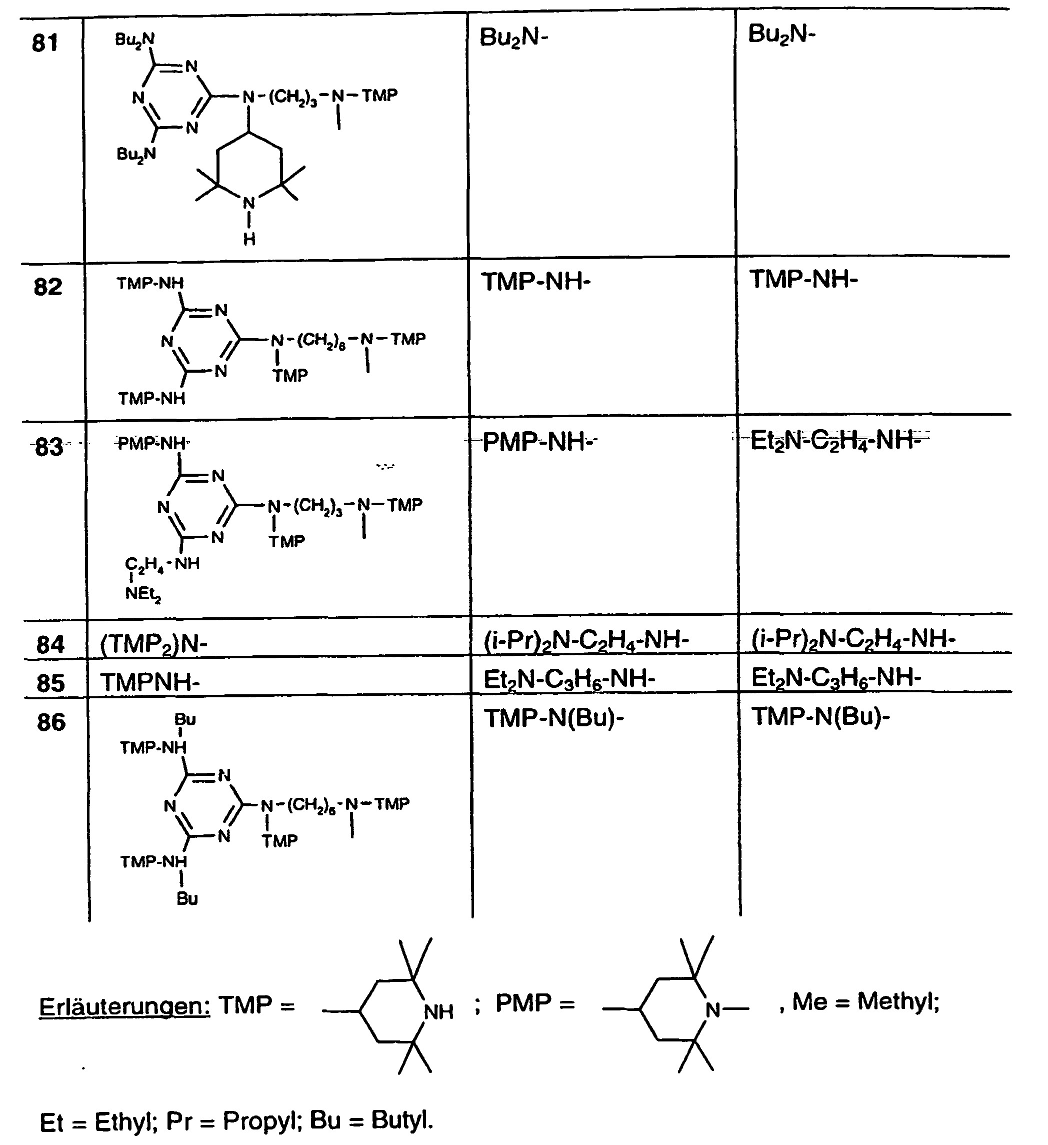

Weitere in Frage kommende Verbindungen sind:

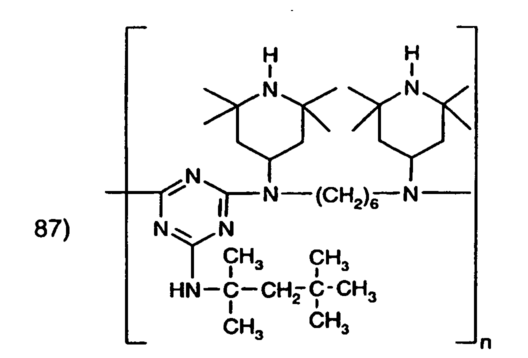

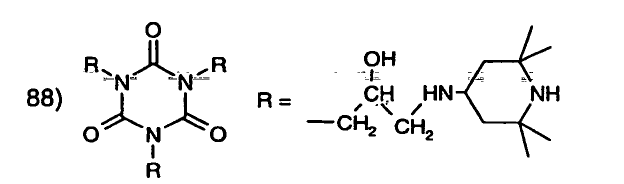

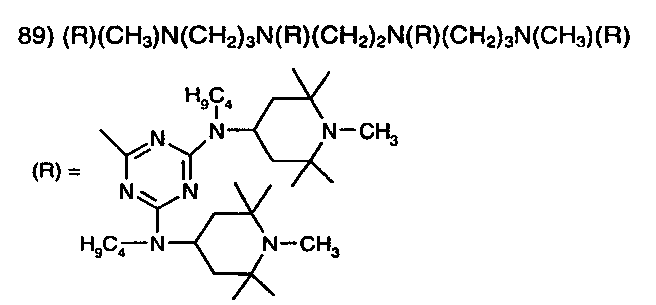

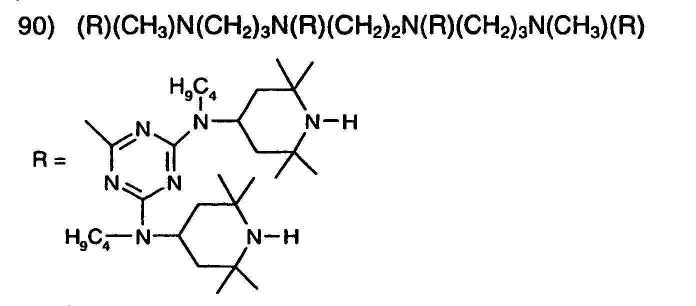

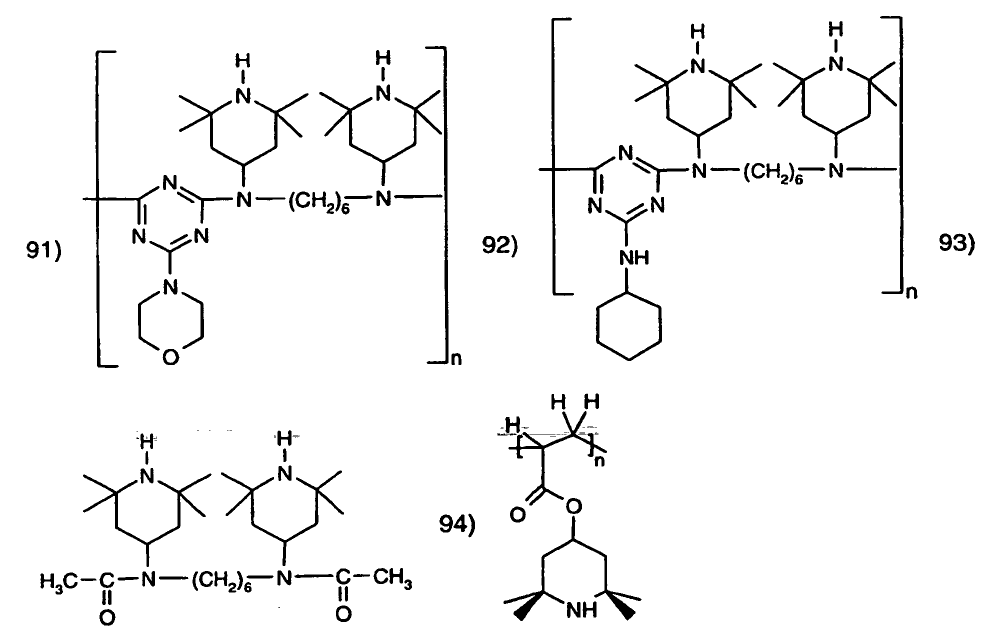

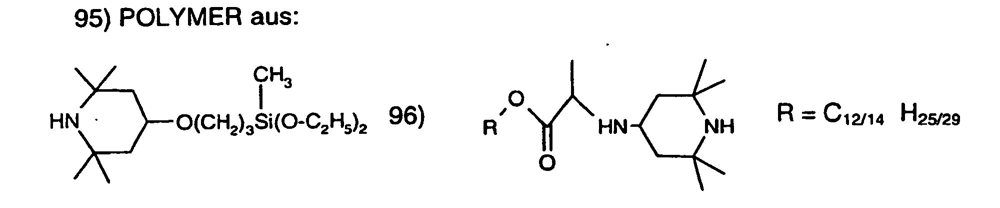

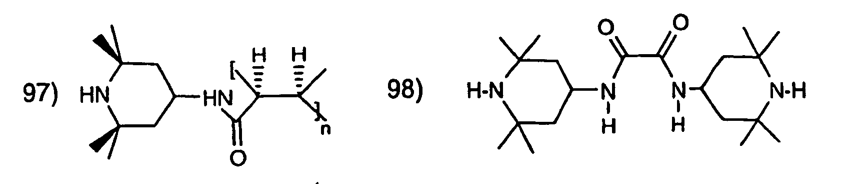

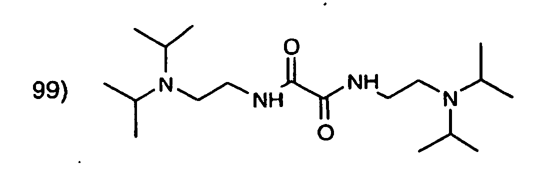

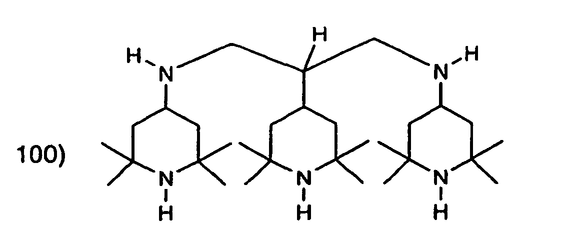

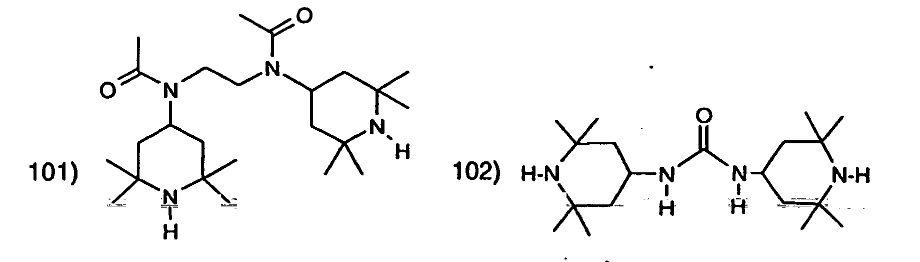

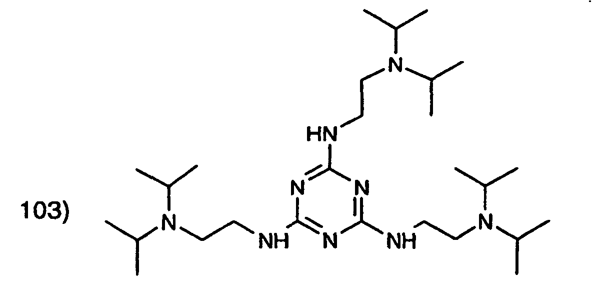

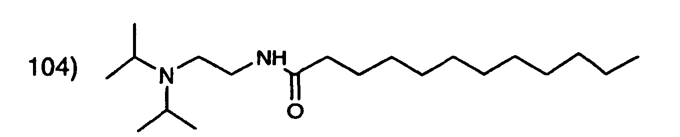

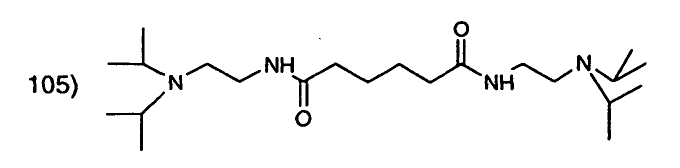

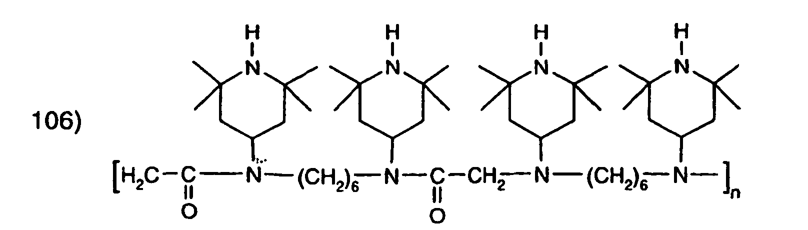

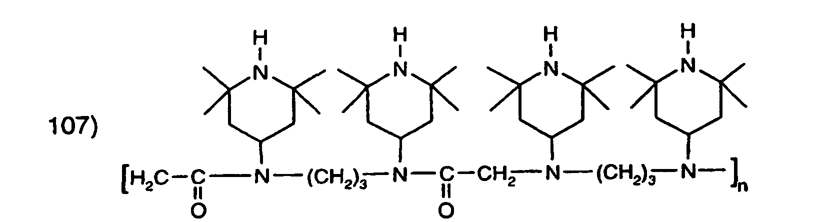

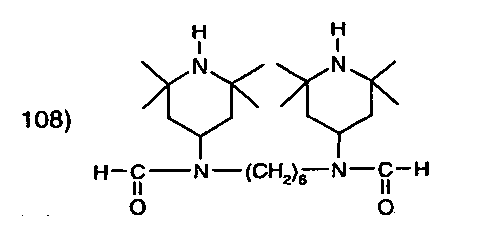

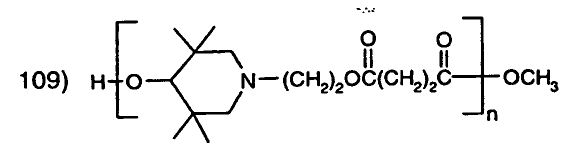

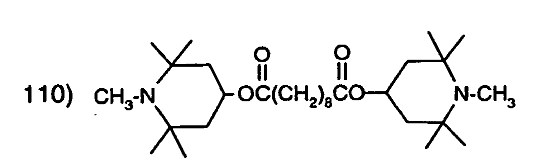

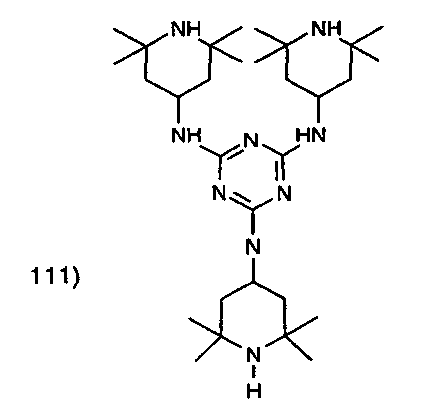

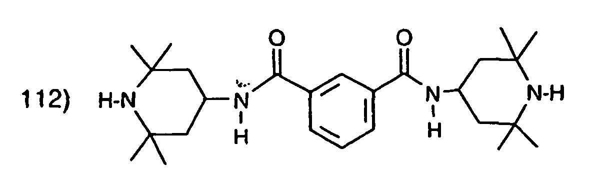

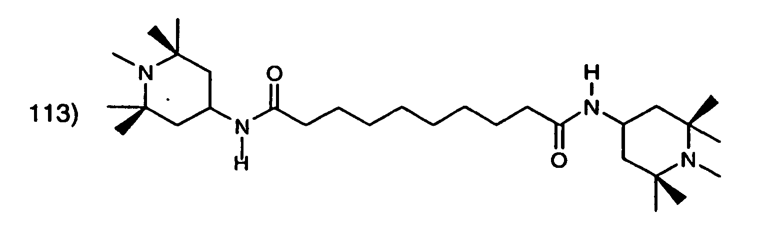

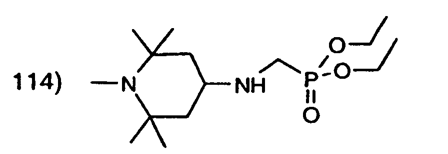

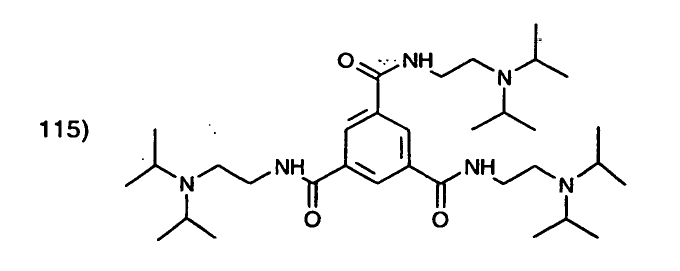

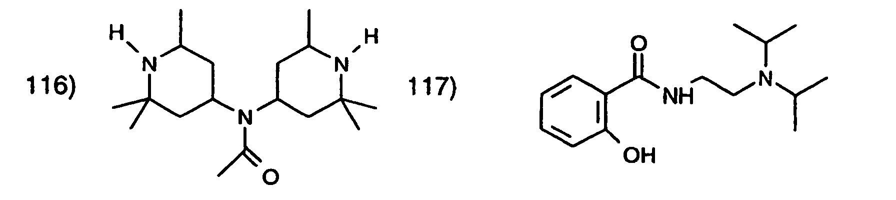

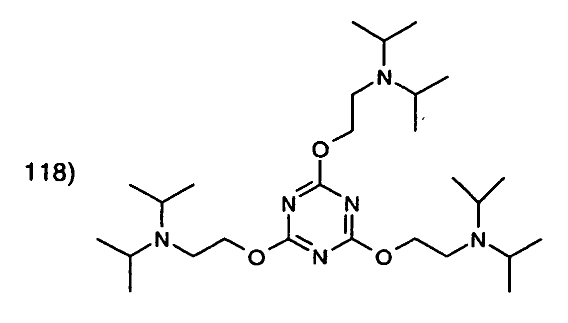

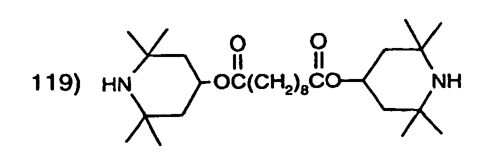

Weitere Beispiele sind: 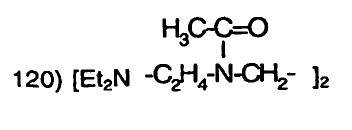 121) [^{iso}Pr₂N-CH₂CH₂-NH-CO-CH₂CH₂-]₂
122) [^{iso}Pr₂N-CH₂CH₂CH₂-NH-CO-]₂ 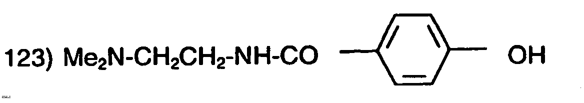 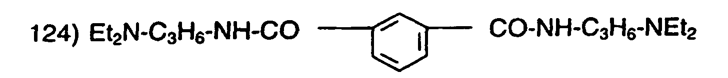 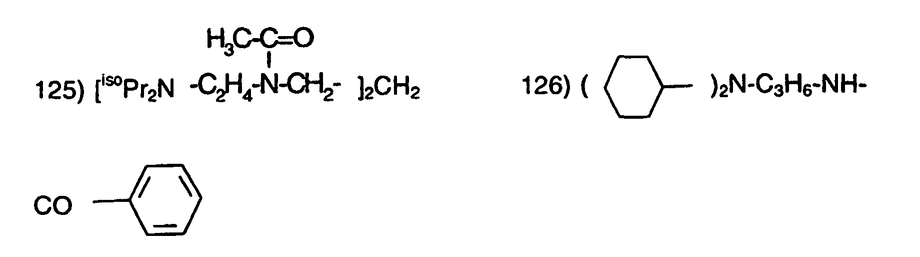 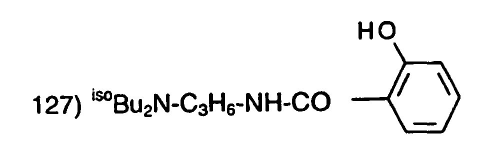 128) (^{tert}Bu₂N-C₃H₆-NH)₂CO 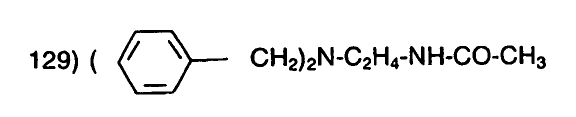 130) (Et^{₂}N-C^{₂}H^{₄}-NH-CO-)^{₂} 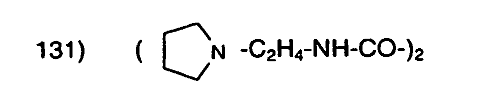 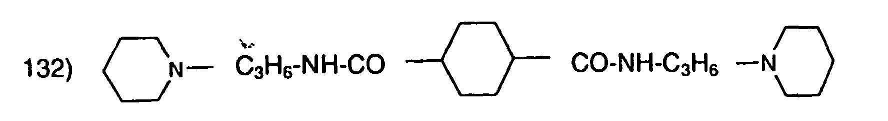 133) [^{iso}Pr₂N-C₂H₄-NH-CO-CH(OH)]₂
134) (Et₂N-C₃H₆-N(CH₃)-CO-CH₂-)₂ 135) (^{iso}Pr₂N-C₃H₆-)₂N-CO-CH₃ 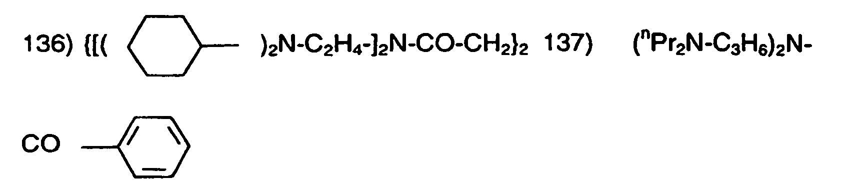 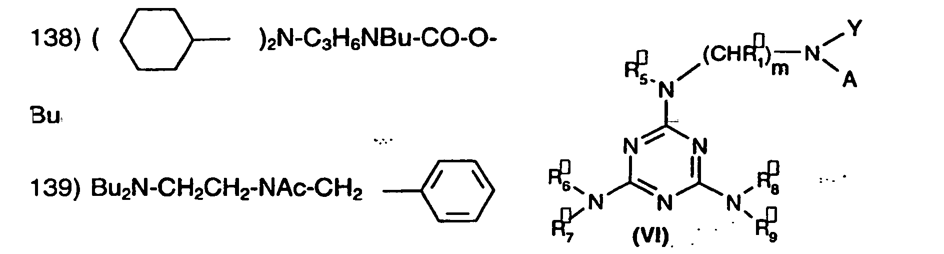 sowie Verbindungen der Struktur VI

Beispiele für Verbindungen der Formel VI sind: ^{□}
**AYN-(CHR**^{**□**}_{**1**}**)**_{**m**}**-NR**^{**□**}_{**5**}**- R**^{**□**}_{**6**}**R**^{**□**}_{**7**}**N- R**^{**□**}_{**8**}**R**^{**□**}_{**9**}**N**
140) Et₂N-C₂H₄-NH- -NH₂ -NH₂
141) Et₂N-C₂H₄-NH- Et₂N-C₂H₄-NH- Et₂N-C₂H₄-NH-
142) ⁿPr₂N-C₃H₆-NH- HO-C₂H₄-NH- HO-C₂H₄-NH-
143) ^{iso}Pr₂N-C₂H₄-NH- (HO-C₂H₄-)₂N- (HO-C₂H₄-)₂N- 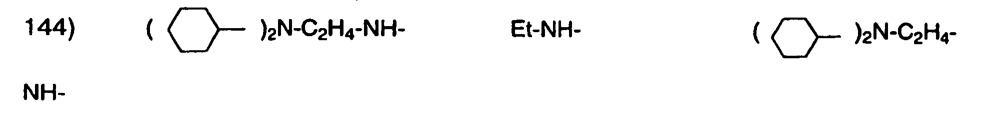 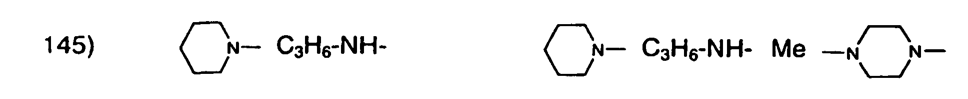 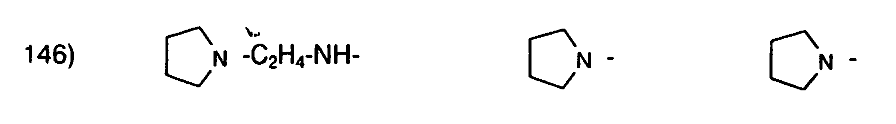 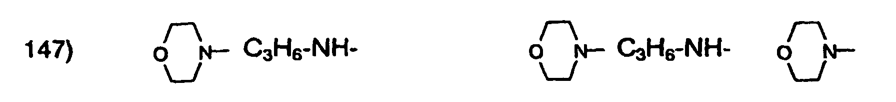 148) ^{iso}Pr₂N-C₂H₄-NH- ^{iso}Pr₂N-C₂H₄-NH- ^{iso}Pr₂N-
149) ^{iso}Pr₂N-C₂H₄-NH- ^{iso}Pr₂N-C₂H₄-NH- ^{iso}PrNEt-

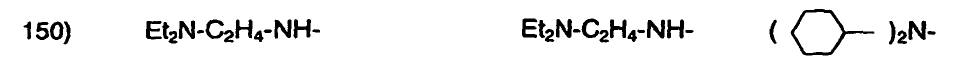

Dabei sind: Me = Methyl, Et = Ethyl, Bu = Butyl, ^{tert}Bu = tertiär-Butyl, ^{iso}Pr = Isopropyl, ⁿPr = normal-Propyl, Ac = Acetyl.

Die Verbindungen der Komponente C) werden zur Stabilisierung im chlorhaltigen Polymer zweckmäßig zu 0,01 bis 10, vorzugsweise zu 0,05 bis 5, insbesondere zu 0,1 bis 3 Teilen auf 100 Teile Polymer eingesetzt.

Anstelle eines einzelnen sterisch gehinderten Amins kann im Rahmen der vorliegenden Erfindung auch ein Gemisch verschiedener sterisch gehinderter Amine verwandt werden.

Die genannten Amine sind bekannte Verbindungen; viele davon sind kommerziell erhältlich.

Die Verbindungen können im Polymer zu 0,005 bis 5, bevorzugt zu 0,01 bis 2 und insbesondere zu 0,01 bis 1% vorhanden sein.

### Weitere Stabilisatoren

Die erfindungsgemäße Stabilisatorkombination kann zusammen mit weiteren Zusätzen verwandt werden, die für die Verarbeitung und Stabilisierung chlorhaltiger Polymere üblich sind, z.B.

### 1. Stabilisatoren:

Epoxide und epoxidierte Fettsäureester; Phosphite; Thiophosphite und Thiophosphate; Polyole; 1 ,3-Dicarbonylverbindungen; Mercaptocarbonsäureester; Dihydropyridine; Antioxidantien; Lichtschutzmittel und UV-Absorber; Alkali- und Erdalkaliverbindungen; Perchlorat-Salze; Zeolithe; Hydrotalcite; Dawsonite;

### 2. weitere gängige PVC-Zusatzstoffe, z.B.

Gleitmittel; Weichmacher; Schlagzähigkeitsmodifikatoren; Verarbeitungshilfen; Treibmittel; Füllstoffe; Antistatika; Biocide; Antifogging-Agents; Pigmente und Farbstoffe; Metalldesaktivatoren; Flammschutzmittel (Vgl. dazu "Handbook of PVC-Formulating" von E. J. Wickson, John Wiley & Sons, New York 1993).

Beispiele für solche Zusatzstoffe sind dem Fachmann bekannt und in der Fachliteratur zu finden. Nicht beschränkend seien hier einige der bekannten Zusätze und Verarbeitungshilfsmittel genannt:

**Phosphite:** Organische Phosphite sind bekannte Co-Stabilisatoren für chlorhaltige Polymere. Beispiele sind Trioctyl-, Tridecyl-, Tridodecyl-, Tritridecyl-, Tripentadecyl-, Trioleyl, Tristearyl-, Triphenyl-, Trikresyl-, Tris-nonylphenyl- Tris-2,4-t-butyl-phenyl- oder Tricyclohexylphosphit.

Weitere geeignete Phosphite sind verschieden gemischte Aryl-dialkyl. bzw Alkyldiarylphosphite wie Phenyldioctyl-, Phenyldidecyl-, Phenyldidodecyl-, Phenylditridecyl-, Phenylditetradecyl-, Phenyldipentadecyl-, Octyldiphenyl-, Decyldiphenyl-, Undecyldiphenyl-, Dodecyldiphenyl-, Tridecyldiphenyl-, Tetradecyldiphenyl-, Pentadecyldiphenyl-,Oleyldiphenyl-, Stearyldiphenyl- und Dodecyl-bis-2,4-di-t-butylphenylphosphit.

Weiterhin können auch Phosphite verschiedener Di- bzw. Polyole vorteilhaft verwandt werden: z.B. Tetraphenyldipropylenglykoldiphosphit, Polydipropylenglykolphenylphosphit, Tetramethylolcyclohexanol-decyldiphosphit, Tetramethylolcyclohexanol-butoxyethoxy-ethyldiphosphit, Tetramethylolcyclohexanol-nonylphenyldiphosphit, Bis-nonylphenyl-ditrimethylolpropandiphosphit, Bis-2-butoxyethyl-di-trimethylolpropandiphosphit, Trishydroxyethylisocyanurat-hexadecyltriphosphit, Didecylpentaerythritdiphosphit, Distearylpentaerythritdiphosphit, Bis-2,4-di-t-butylphenylpentaerythritdiphosphit, sowie Gemische dieser Phosphite und Aryl/alkylphosphit-Gemische der statistischen Zusammensetzung (H₁₉C₉-C₆H₄)O_{1,5}P(OC_{12,13}H_{25,27})_{1,5} oder [C₈H₁₇-C₆H₄-O-]₂P[i-C₈H₁₇O] oder (H₁₉C₉-C₆H₄)O_{1,5}P(OC_{9,11}H_{19,23})_{1,5}

Die organischen Phosphite können in einer Menge von beispielsweise 0,01 bis 10, zweckmäßig 0,05 bis 5 und insbesondere 0,1 bis 3 Gew.-Teilen, bezogen auf 100 Gew.-Teile PVC, angewandt werden.

**Polyole:** Als Verbindungen dieses Typs kommen beispielsweise in Betracht: Pentaerythrit, Dipentaerythrit, Tripentaerythrit, Bistrimethylolpropan, Trimethylolethan, Bistrimethylolethan, Trimethylolpropan, Sorbit, Maltit, Isomaltit, Lactit, Lycasin, Mannit, Lactose, Leucrose, Tris-(hydroxyethyl)-isocyanurat, Palatinit, Tetramethylolcyclohexanol (TMCH), Tetramethylolcyclopentanol, Tetramethylolcyclopyranol, Glycerin, Diglycerin, Polyglycerin, Thiodiglycerin, oder 1-0-α-D-Glycopyranosyl-D-mannit-dihydrat sowie Polyvinylalkohol und Cyclodextrine. Bevorzugt sind davon TMCH und die Disaccharidalkohole.

Die Polyole können in einer Menge von beispielsweise 0,01 bis 20, zweckmäßig 0,1 bis 20 und insbesondere 0,1 bis 10 Gew.-Teilen, bezogen auf 100 Gew.-Teile PVC, angewandt werden.

**1,3-Dicarbonylverbindungen:** Beispiele für 1,3-Dicarbonylverbindungen sind Acetylaceton, Butanoylaceton, Heptanoylaceton, Stearoylaceton, Palmitoylaceton, Lauroylaceton, 7-tert.Nonylthio-heptandion-2,4, Benzoylaceton, Dibenzoylmethan, Lauroylbenzoylmethan, Palmitoyl-benzoylmethan, Stearoyl-benzoylmethan, Isooctylbenzoylmethan, 5-Hydroxycapronyl-benzoylmethan, Tribenzoylmethan, Bis(4-methylbenzoyl)methan, Benzoyl-p-chlorbenzoylmethan, Bis(2-hydroxybenzoyl)methan, 4-Methoxybenzoyl-benzoylmethan, Bis(4-methoxybenzoyl)methan, 1-Benzoyl-1-acetylnonan, Benzoyl-acetyl-phenylmethan, Stearoyl-4-methoxybenzoylmethan, Bis(4-tert-butylbenzoyl)methan, Benzoyl-formylmethan, Benzoyl-phenylacetylmethan, Bis(cyclohexanoyl)methan, Di(pivaloyl)methan, Acetessigsäure-methylester, -ethylester, -hexylester, -octylester, -dodecylester oder - octadecylester, Benzoylessigsäure-ethylester, -butylester, -2-ethylhexylester, - dodecylester oder -octadecylester, Stearoylessigsäure-ethyl-, -propyl-, -butyl-, - hexyl- oder -octylester und Dehydracetsäure sowie deren Zink-, Alkali, Erdalkali- oder Aluminiumsalze.

Die 1,3-Dicarbonylverbindungen können in einer Menge von beispielsweise 0,01 bis 10, zweckmäßig 0,01 bis 3 und insbesondere 0,01 bis 2 Gew.-Teilen, bezogen auf 100 Gew.-Teile PVC, angewandt werden.

**Thiophosphite und Thiophosphate:** Unter Thiophosphiten bzw. Thiophosphaten sind Verbindungen vom allgemeinen Typ (RS)₃P, (RS)₃P=O bzw. (RS)₃P=S zu verstehen, wie sie in den Patentschriften DE 2809492, EP 090770 und EP 573394 beschrieben sind. Beispiele sind: Trithiohexylphosphit, Trithiooctylphosphit, Trithiolaurylphosphit, Trithiobenzylphosphit, Trithiophosphorigsäure-tris-[carboxy-i-octyloxy]-methylester, Trithiophosphorsäure-S,S,S-tris-[carbo-i-octyloxy]-methylester, Trithiophosphorsäure-S,S,S-tris-[carbo-2-ethylhexyloxy]-methylester, Trithiophosphorsäure-S,S,S,-tris-1 -[carbo-hexyloxy]-ethylester, Trithiophosphorsäure-S,S,S-tris-1-[carbo-2-ethylhexyloxy]-ethylester, Trithiophosphorsäure-S,S,S-tris-2-[carbo-2-ethyl hexyloxy]-ethylester.

Die Thiophosphite bzw. Thiophosphate können zweckmäßig zu 0,01 bis 20, bevorzugt zu 0,1 bis 5, insbesondere zu 0,1 bis 1 % im chlorhaltigen Polymer vorliegen.

**Mercaptocarbonsäureester:** Beispiele für diese Verbindungen sind: Ester der Thioglykolsäure, Thioäpfelsäure, Mercaptopropionsäure, der Mercaptobenzoesäuren bzw. der Thiomilchsäure, wie sie in FR 2459816, EP 90748, FR 2552440 und EP 365483 beschrieben sind. Die Mercaptocarbonsäureester umfassen auch entsprechende Polyolester bzw. deren Partialester.

Sie können zweckmäßig zu 0,01 bis 10, bevorzugt zu 0,1 bis 5, insbesondere zu 0,1 bis 1 % im chlorhaltigen Polymer vorliegen.

**Epoxide und epoxidierte Fettsäureester:** Die erfindungsgemäße Stabilisatorkombination kann zusätzlich mindestens einen epoxidierten Fettsäureester enthalten. Es kommen dafür vor allem Ester von Fettsäuren aus natürlichen Quellen, wie Sojaöl oder Rapsöl, in Frage.

Die Epoxyverbindungen werden in Mengen von beispielsweise ab 0,1 Teil, bezogen auf 100 Gew.-Teile Zusammensetzung, zweckmäßig von 0,1 bis 30, vor zugsweise von 0,5 bis zu 25 Gew.-Teilen, angewandt. Weitere Beispiele sind epoxidiertes Polybutadien, epoxidiertes Leinsamenöl, epoxidiertes Fischöl, epoxidierter Talg, Methylbutyl- oder 2-Ethylhexylepoxystearat, Tris (epoxypropyl)isocyanurat, epoxidiertes Ricinusöl, epoxidiertes Sonnenblumenöl, 3-Phenoxy-1,2-epoxypropan, Bisphenol-A-diglycidylether, Vinylcyclohexendiepoxyd, Dicyclopentadiendiepoxyd und 3,4-Epoxycyclohexylmethyl-3,4-epoxycyclohexancarboxylat.

Als **Epoxide** kommen auch Bisphenol-A- und Bisphenol-F-derivate in Frage wie z.B. in der südafrikanischen Patentschrift ZA-2600/94 beschrieben.

**Dihydropyridine und Polydihydropyridine:** Als monomere Dihydropyridine kommen Verbindungen, wie z.B. in FR 2039496, EP 2007 , EP 362012 und EP 24754 beschrieben, in Frage. Bevorzugt sind solche der Formel 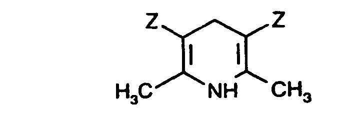 , worin Z für CO₂CH₃, CO₂C₂H_{5,} CO₂ⁿC₁₂H₂₅ oder -CO₂C₂H₄-S-ⁿC₁₂H₂₅ steht.

Als Polydihyrdropyridine kommen vor allem Verbindungen der folgenden Formel in Frage 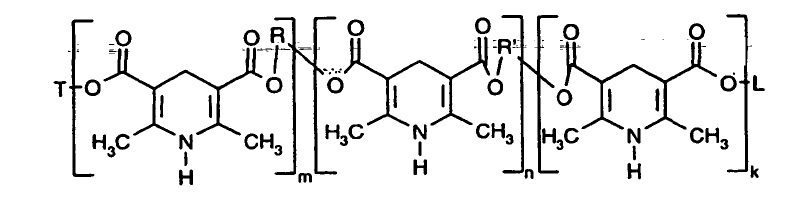 worin T für unsubstituiertes C₁-₁₂ Alkyl steht.
L dieselben Bedeutungen wie T hat.
m und n Zahlen von 0 bis 20 bedeuten,
k 0 oder 1 ist,

R und R' unabhängig voneinander Aethylen, Propylen, Butylen oder eine Alkylen- oder Cycloalkylenbismethylengruppe des Typs -(-CₚH₂ₚ-X-)ₜCₚH₂ₚ- sind.
p 2 bis 8 ist,
t 0 bis 10 ist
X für Sauerstoff oder Schwefel steht.

Solche Verbindungen sind in EP-0286887 näher beschrieben. Die (Poly-)Dihydropyridine können im chlorhaltigen Polymer zweckmäßig zu 0,001 bis 5 und insbesondere 0,005 bis 1 Gew.-Teilen, bezogen auf das Polymer, angewandt werden.

Besonders bevorzugt ist Thiodiethylen-bis-[5-methoxycarbonyl-2,6-dimethyl-1,4-dihydro pyridin-3-carboxylat].

**Alkali und Erdalkali-Verbindungen:** Darunter versteht man vornehmlich die Carboxylate der oben beschriebenen Säuren, aber auch entsprechende Oxide bzw. Hydroxide, Carbonate oder basische Carbonate. Es kommen auch deren Gemische mit organischen Säuren in Frage. Beispiele sind NaOH, KOH, CaO, Ca(OH₂), MgO, Mg(OH)₂, CaCO₃, MgCO₃, Dolomit, Huntit, sowie fettsaure Na-, K-, Ca- oder Mg-Salze.

Bei Erdalkali- und Zn-Carboxylaten können auch deren Addukte mit MO oder M(OH)₂ (M = Ca, Mg, Sr oder Zn), sogenannte "overbased" Verbindungen, zum Einsatz kommen.

Bevorzugt werden zusätzlich zur erfindungsgemäßen Stabilisatorkombination Alkali-, Erdalkali- und/oder Aluminumcarboxylate eingesetzt, wie z.B. Na, K, Ca oder Aluminiumstearate.

**Perchlorat-Salze:** Beispiele sind diejenigen der Formel M(ClO₄)ₙ wobei M für Li, Na, K, Mg, Ca, Ba, Zn, Al, Ce oder La steht. Der Index n ist entsprechend der Wertigkeit von M 1, 2 oder 3. Die Perchloratsalze können mit Alkoholen oder Ätheralkoholen komplexiert sein. Das jeweilige Perchlorat kann dabei in verschiedenen gängigen Darreichungsformen eingesetzt werden; z.B als Salz oder wäßrige Lösung aufgezogen auf ein Trägermaterial wie PVC, Ca-Silikat, Zeolithe oder Hydrotalcite, oder durch chemische Reaktion von Hydrotalcit mit Perchlorsäure gewonnen werden.

Die Perchlorate können in einer Menge von beispielsweise 0,001 bis 5, zweckmäßig 0,01 bis 3, besonders bevorzugt 0,01 bis 2 Gew.-Teilen, bezogen auf 100 Gew.-Teile PVC, angewandt werden.

**Hydrotalcite und Zeolithe:** Die chemische Zusammensetzung dieser Verbindungen ist dem Fachmann bekannt, z.B aus den Patentschriften DE 3843581, US 4000100, EP 062813, WO 93/20135.

Verbindungen aus der Reihe der Hydrotalcite können durch die allgemeine Formel VII,

**M** ^{**2+**} _{**1-x**} **• M** ^{**3+**} _{**x**} **• (OH)**_{**2**} **• (A** ^{**n-**}**)** _{**x/n**} **• mH**_{**2**}**O** (VII)

beschrieben werden,
wobei
M²⁺ = eines oder mehrere der Metalle aus der Gruppe Mg, Ca, Sr, Zn oder Sn ist,
M³⁺ = Al oder B ist,
Aⁿ ein Anion mit der Valenz n darstellt,
n eine Zahl von 1-2 ist,
0 <x ≤ 0,5 ist,
m eine Zahl von 0-20 ist.

Bevorzugt ist
Aⁿ = OH⁻, ClO₄⁻, HCO₃⁻, CH₃COO⁻, C₆H₅COO⁻, CO₃²⁻, SO₄⁻⁻, 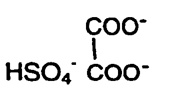 , (CHOHCOO)₂²⁻, (CH₂COO)₂²⁻, CH₃CHOHCOO⁻, HPO₃²⁻ oder HPO₄²⁻ darstellt;

Beispiele für Hydrotalcite sind
Al₂O₃.6MgO.CO₂.12H₂O, Mg_{4,5}Al₂(OH)₁₃.CO₃.3,5H₂O, 4MgO.Al₂O₃.CO₂.9H₂O, 4MgO.Al₂O₃.CO₂.6H₂O, ZnO.3MgO.Al₂O₃.CO₂.8-9H₂O und ZnO.3MgO.Al₂O₃.CO₂.5-6H₂O.

Verbindungen aus der Reihe der Zeolithe (Alkali bzw. Erdalkalialumosilikate) können durch die allgemeine Formel (VIII)

**M**_{**x/n**}**[(AlO**_{**2**}**)**_{**x**}**(SiO**_{**2**}**)**_{**y**}**].wH**_{**2**}**O** (VIII)

beschrieben werden,
worin n die Ladung des Kations M;
M ein Element der ersten oder zweiten Hauptgruppe, wie Li, Na, K, Mg, Ca, Sr oder Ba, oder Zn ist,
y:x eine Zahl von 0,8 bis 15, bevorzugt von 0,8 bis 1,2; und
w eine Zahl von 0 bis 300, bevorzugt von 0,5 bis 30, sind.
Strukturen sind beispielsweise dem "Atlas of Zeolite" von W.M. Meier und D.H. Olson, Butterworth-Heinemann, 3. Aufl. 1992 zu entnehmen.

Beispiele für Zeolithe sind Natriumalumosilikate der Formeln Na₁₂Al₁₂Si₁₂O₄₈ . 27 H₂O [Zeolith A], Na₆Al₆Si₆O₂₄. 2 NaX . 7,5 H₂O, X= OH, Halogen, ClO₄ [Sodalith]; Na₆Al₆Si₃₀O₇₂ . 24 H₂O; Na₈Al₈Si₄₀O₉₆ . 24 H₂O; Na₁₆Al₁₆Si₂₄O₈₀ . 16 H₂O; Na₁₆Al₁₆Si₃₂O₉₆ . 16 H₂O; Na₅₆Al₅₆Si₁₃₆O₃₈₄ . 250 H₂O [Zeolith Y], Na₈₆Al₈₆Si₁₀₆O₃₈₄ . 264 H₂O [Zeolith X];
oder die durch teilweisen bzw. vollständigen Austausch der Na-Atome durch Li-, K-, Mg-, Ca-, Sr- oder Zn-Atome darstellbaren Zeolithe wie (Na,K)₁₀Al₁₀Si₂₂O₆₄ . 20 H₂O ; Ca_{4,5}Na₃[(AlO₂)₁₂(SiO₂)₁₂] . 30 H₂O; K₉Na₃[(AlO₂)₁₂(SiO₂)₁₂] . 27 H₂O.

Weitere geeignete Zeolithe sind:
Na₂O·Al₂O₃·(2 bis 5) SiO₂·(3,5 bis 10) H₂O [Zeolith P]
Na₂O·Al₂O₃·2 SiO₂·(3.5-10)H₂O (Zeolith MAP)
oder die durch teilweisen bzw. vollständigen Austausch der Na-Atome durch Li-, K- oder H-Atome darstellbaren Zeolithe wie
(Li,Na,K,H)₁₀Al₁₀Si₂₂O₆₄ . 20 H₂O, K₉Na₃[(AlO₂)₁₂(SiO₂)₁₂]. 27 H₂O, K₄Al₄Si₄O₁₆·6H₂O [Zeolith K-F], Na₈Al₈Si₄₀O₉₆.24 H₂O Zeolith D, wie in Barrer et al.. J. Chem. Soc. **1952**, 1561-71, und in US 2,950,952 beschrieben;

Ferner kommen folgende Zeolithe in Frage:
K-Offretit, wie in EP-A-400,961 beschrieben; Zeolith R, wie in GB 841,812 beschrieben; Zeolith LZ-217, wie in US 4,503,023 beschrieben; Ca-freier Zeolith LZ-218, wie in US 4,333,859 beschrieben; Zeolith T, Zeolith LZ-220, wie in US 4,503,023 beschrieben; Na₃K₆Al₉Si₂₇O₇₂.21 H₂O [Zeolith L]; Zeolith LZ-211, wie in US 4,503,023 beschrieben; Zeolith LZ-212, wie in US 4,503,023 beschrieben; Zeolith O, Zeolith LZ-217 , wie in US 4,503,023 beschrieben; Zeolith LZ-219, wie in US 4,503,023 beschrieben; Zeolith Rho, Zeolith LZ-214, wie in US 4,503,023 beschrieben; Zeolith ZK-19, wie in Am. Mineral. **54** 1607 (1969) beschrieben; Zeolith W (K-M), wie in Barrer et al. J. Chem. Soc. **1956**, 2882, beschrieben; Na₃₀Al₃₀Si₆₆O₁₉₂. 98 H₂O [Zeolith ZK-5, Zeolith Q]

Besonders bevorzugt werden Zeolith P-Typen der Formel VIII verwandt, worin x 2 bis 5 und y 3.5 bis 10 sind, ganz besonders bevorzugt Zeolith MAP der Formel VIII, worin x 2 und y 3.5 bis 10 sind. Insbesondere handelt es sich um Zeolith Na-P, d.h. M steht für Na. Dieser Zeolith tritt im allgemeinen in den Varianten Na-P-1, NaP-2 und Na-P-3 auf, die sich durch ihre kubische, tetragonale oder orthorhombische Struktur unterscheiden (R.M.Barrer, B.M.Munday, J.Chem.Soc. A **1971**, 2909-14). In der eben genannten Literatur ist auch die Herstellung von Zeolith P-1 und P-2 beschrieben. Zeolith P-3 ist danach sehr selten und daher kaum von praktischem Interesse. Die Struktur des Zeolith P-1 entspricht der aus dem obengenannten Atlas of Zeolite Structures bekannten Gismonditstruktur. In neuerer Literatur (EP-A-384 070) wird zwischen kubischem (Zeolith B oder P_{c}) und tetragonalem (Zeolith P₁) Zeolith vom P-Typ unterschieden. Dort werden auch neuere Zeolithe des P-Typs mit Si:AI Verhältnissen unter 1,07:1 genannt. Hierbei handelt es sich um Zeolithe mit der Bezeichnung MAP oder MA-P für "Maximum Aluminium P". Je nach Herstellungsverfahren kann Zeolith P geringe Anteile anderer Zeolithe enthalten. Sehr reiner Zeolith P ist in WO 94/26662 beschrieben worden.

Im Rahmen der Erfindung lassen sich auch solche feinteiligen, wasserun löslichen Natriumalumosilikate verwenden, die in Gegenwart von wasserlöslichen anorganischen oder organischen Dispergiermitteln gefällt und kristallisiert wurden. Diese können in beliebiger Weise vor oder während der Fällung bzw. Kristallisation in das Reaktionsgemisch eingebracht werden.

Bevorzugt sind Na-Zeolith A und Na-Zeolith P.

Die Hydrotalcite und Zeolithe können natürlich vorkommende Mineralien oder synthetisch hergestellte Verbindungen sein.

Die Hydrotalcite und/oder Zeolithe können in Mengen von beispielsweise 0,1 bis 50, zweckmäßig 0,1 bis 10 und insbesondere 0,1 bis 5 Gew.-Teilen, bezogen auf 100 Gew.-Teile halogenhaltiges Polymer angewandt werden.

**Alkalialumocarbonate (Dawsonite):** Diese Verbindungen lassen sich durch die Formel

**{(M**_{**2**}**O)**_{**m**}**.(Al**_{**2**}**O**_{**3**}**)**_{**n**}**.Z**_{**o**}**·pH**_{**2**}**O}** (V)

darstellen
worin M H, Li, Na, K, Mg_{1/2}, Ca_{1/2}, Sr_{1/2} oder Zn_{1/2}; Z CO₂, SO₂, (Cl₂O₇)_{1/2}, B₄O₆, S₂O₂ (Thiosulfat) oder C₂O₂ (Oxalat); m, wenn M Mg_{1/2} oder Ca_{1/2} ist, eine Zahl zwischen 1 und 2, in allen anderen Fällen eine Zahl zwischen 1 und 3; n eine Zahl zwischen 1 und 4; o eine Zahl zwischen 2 und 4; und p eine Zahl zwischen 0 und 30 ist.

Die verwendbaren Alumosalz-Verbindungen der Formel (V) können natürlich vorkommende Mineralien sein oder synthetisch hergestellte Verbindungen. Die Metalle können partiell gegeneinander ausgetauscht sein. Die genannten Alumosalz-Verbindungen sind kristallin, teilkristallin oder amorph oder können als getrocknetes Gel vorliegen. Die Alumosalzverbindungen können auch in selteneren, kristallinen Modifikationen vorliegen. Ein Verfahren zur Herstellung solcher Verbindungen ist in EP 394670 angegeben. Beispiele für natürlich vorkommende Alumosalz-Verbindungen sind Indigirit, Tunisit, Alumohydrocalcit, Para-Alumohydrocalcit, Strontiodresserit und Hydro-Strontiodresserit. Weitere Beispiele für Alumosalz-Verbindungen sind Kaliumalumocarbonat {(K₂O).(Al₂O₃).(CO₂)₂.2H₂O}, Natriumalumothiosulfat {(Na₂O).(Al₂O₃).(S₂O₂)₂.2H₂O}, Kaliumalumosulfit {(K₂O).(Al₂O₃).(SO₂)₂.2H₂O}, Calciumalumooxalat {(CaO).(Al₂O₃).(C₂O₂)₂.5H₂O}, Magnesiumalumotetraborat {(MgO).(Al₂O₃).(B₄O₆)₂.5H₂O}, {([Mg_{0,2}Na_{0,6}]₂O).(Al₂O₃).(CO₂)₂.4,1H₂O}, {([Mg_{0,2}Na_{0,6}]₂O).(Al₂O₃).(CO₂)₂.4,3H₂O} und {([Mg_{0,3}Na_{0,4}]₂O).(Al₂O₃).(CO₂)_{2.2}.4,9H₂O}.

Die gemischten Alumosalz-Verbindungen können nach an sich bekannten

Verfahren durch Kationenaustausch, bevorzugt aus den Alkali-Alumosalz-Verbindungen oder durch Kombinationsfällung (siehe beispielsweise US 5,055,284) erhalten werden.

Bevorzugt sind Alumosalz-Verbindungen der obigen Formel, worin M Na oder K; Z CO₂, SO₂ oder (Cl₂O₇)_{1/2}; m 1-3; n 1-4; o 2-4 und p 0-20 bedeuten. Besonders bevorzugt bedeutet Z CO₂.

Weiter sind Verbindungen bevorzugt, welche sich durch folgende Formeln darstellen lassen:
M₂O.Al₂O₃.(CO₂)₂ . pH₂O (Ia), (M₂O)₂.(Al₂O₃)₂.(CO₂)₂ . pH₂O (Ib), M₂O.(Al₂O₃)₂.(CO₂)₂ . pH₂O (Ic)
wobei M ein Metall wie Na, K, Mg_{1/2}, Ca_{1/2}, Sr_{1/2} oder Zn_{1/2} und p eine Zahl von 0 bis 12 bedeutet.

Besonders bevorzugt ist Natriumalumodihydroxycarbonat (DASC) und die homologe Kaliumverbindung (DAPC).

Die Dawsonite können in einer Menge von beispielsweise 0,01 bis 50, zweckmäßig 0,1 bis 10, besonders bevorzugt 0,1 bis 5 Gew.-Teilen, bezogen auf 100 Gew.-Teile halogenhaltiges Polymer angewandt werden.

Die erfindungsgemäße Stabilisatorkombination kann zusammen mit weiteren Zusätzen verwandt werden, die für die Verarbeitung und Stabilisierung chlorhaltiger Polymere üblich sind, wie z.B.:

**Antioxidantien:** Als solche kommen beispielsweise in Betracht:
1. Alkylierte Monophenole, z.B. 2,6-Di-tert-butyl-4-methylphenol, 2-butyl-4,6-dimethylphenol, 2,6-Di-tert-butyl-4-ethylphenol, 2,6-Di-tert-butyl-4-n-butylphenol, 2,6-Di-tert-butyl-4-iso-butylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tricyclohexylphenol, 2,6-Di-tert-butyl-4-methoxymethylphenol, 2,6-Di-nonyl-4-methylphenol, 2,4-Dimethyl-6-(1'-methyl-undec-1'-yl)-phenol, 2,4-Dimethyl-6-(1'-methyl-heptadec-1'-yl)-phenol, 2,4-Dimethyl-6-(1'-methyl-tridec-1'-yl)-phenol und Mischungen davon.
2. Alkylthiomethylphenole, z.B. 2,4-Di-octylthiomethyl-6-tert-butylphenol, 2,4-Di-octylthiomethyl-6-methylphenol, 2,4-Di-octylthiomethyl-6-ethylphenol, 2,6-Di-dodecylthiomethyl-4-nonylphenol.
3. Hydrochinone und alkylierte Hydrochinone, z.B. 2,6-Di-tert-butyl-4-methoxyphenol, 2,5-Di-tert-butyl-hydrochinon, 2,5-Di-tert-amyl-hydrochinon, 2,6-Diphenyl-4-octadecyloxyphenol, 2,6-Di-tert-butyl-hydrochinon, 2,5-Di-tert-butyl-4-hydroxyanisol, 3,5-Di-tert-butyl-4-hydroxyanisol, 3,5-Di-tert-butyl-4-hydroxyphenylstearat, Bis-(3,5-di-tert-butyl-4-hydroxyphenyl)adipat.
4. Tocopherole, z.B. α-Tocopherol, β-Tocopherol, γ-Tocopherol, δ-Tocopherol und Mischungen davon (Vitamin E).
5. Hydroxylierte Thiodiphenylether, z.B. 2,2'-Thio-bis-(6-tert-butyl-4-methylphenol), 2,2'-Thio-bis-(4-octylphenol), 4,4'-Thio-bis-(6-tert-butyl-3-methylphenol), 4,4'-Thio-bis-(6-tert-butyl-2-methylphenol), 4,4'-Thio-bis-(3,6-di-sec.-amylphenol), 4,4'-Bis-(2,6-dimethyl-4-hydroxyphenyl)-disulfid.
6. Alkyliden-Bisphenole, z.B. 2,2'-Methylen-bis-(6-tert-butyl-4-methylphenol), 2,2'-Methylen-bis-(6-tert-butyl-4-ethylphenol), 2,2'-Methylen-bis-[4-methyl-6-(α-methylcyclohexyl)-phenol], 2,2'-Methylen-bis-(4-methyl-6-cyclohexylphenol), 2,2'-Methylen-bis-(6-nonyl-4-methylphenol), 2,2'-Methylen-bis-(4,6-di-tert-butylphenol), 2,2'-Ethyliden-bis-(4,6-di-tert-butylphenol), 2,2'-Ethyliden-bis-(6-tert-butyl-4-isobutylphenol), 2,2'-Methylen-bis-[6-(a-methylbenzyl)-4-nonylphenol], 2,2'-Methylen-bis-[6-(α,α-dimethylbenzyl)-4-nonylphenol], 4,4'-Methylen-bis-(2,6-di-tert-butylphenol), 4,4'-Methylen-bis-(6-tert-butyl-2-methylphenol), 1,1-Bis-(5-tert-butyl-4-hydroxy-2-methylphenyl)-butan, 2,6-Bis-(3-tert-butyl-5-methyl-2-hydroxybenzyl)-4-methylphenol, 1,1,3-Tris-(5-tert-butyl-4-hydroxy-2-methylphenyl)-butan, 1,1-Bis-(5-tert-butyl-4-hydroxy-2-methyl-phenyl)-3-n-dodecylmercaptobutan, Ethylenglycol-bis-[3,3-bis-(3'-tert-butyl-4'-hydroxyphenyl)-butyrat], Bis-(3-tert-butyl-4-hydroxy-5-methylphenyl)-dicyclopentadien, Bis-[2-(3'-tert-butyl-2'-hydroxy-5'-methyl-benzyl)-6-tert-butyl-4-methyl-phenyl]-terephthalat, 1,1-Bis-(3,5-dimethyl-2-hydroxyphenyl)-butan, 2,2-Bis-(3,5-di-tert-butyl-4-hydroxyphenyl)-propan, 2,2-Bis-(5-tert-butyl-4-hydroxy-2-methylphenyl)-4-n-dodecylmercapto-butan, 1,1,5,5-Tetra-(5-tert-butyl-4-hydroxy-2-methylphenyl)-pentan.
7. O-, N- und S-Benzylverbindungen, z.B. 3,5,3',5'-Tetra-tert-butyl-4,4'-dihydroxy-dibenzylether, Octadecyl-4-hydroxy-3,5-dimethylbenzyl-mercaptoacetat, Tris-(3,5-di-tert-butyl-4-hydroxybenzyl)-amin, Bis-(4-tert-butyl-3-hydroxy-2,6-dimethylbenzyl)-dithioterephthalat, Bis-(3,5-di-tert-butyl-4-hydroxybenzyl)-sulfid, Isooctyl-3,5-di-tert-butyl-4-hydroxybenzyl-mercaptoacetat.
8. Hydroxybenzylierte Malonate, z.B. Dioctadecyl-2,2-bis-(3,5-di-tert-butyl-2-hydroxybenzyl)-malonat, Di-octadecyl-2-(3-tert-butyl-4-hydroxy-5-methylbenzyl)-malonat, Di-dodecylmercaptoethyl-2,2-bis-(3,5-di-tert-butyl-4-hydroxybenzyl)-malonat, Di-[4-(1,1,3,3-tetramethylbutyl)-phenyl]-2,2-bis-(3,5-di-tert-butyl-4-hydroxybenzyl)-malonat.
9. Hydroxybenzyl-Aromaten, z.B. 1,3,5-Tris-(3,5-di-tert-butyl-4-hydroxybenzyl)-2,4,6-trimethylbenzol, 1,4-Bis-(3,5-di-tert-butyl-4-hydroxybenzyl)-2,3,5,6-tetramethylbenzol, 2,4,6-Tris-(3,5-di-tert-butyl-4-hydroxybenzyl)-phenol.
10. Triazinverbindungen, z.B. 2,4-Bis-octylmercapto-6-(3,5-di-tert-butyl-4-hydroxyanilino)-1,3,5-triazin, 2-Octylmercapto-4,6-bis-(3,5-di-tert-butyl-4-hydroxyanilino)-1,3,5-triazin, 2-Octylmercapto-4,6-bis-(3,5-di-tert-butyl-4-hydroxyphenoxy)-1,3,5-triazin, 2,4,6-Tris-(3,5-di-tert-butyl-4-hydroxyphenoxy)-1,2,3-triazin, 1,3,5-Tris-(3,5-di-tert-butyl-4-hydroxybenzyl)-isocyanurat, 1,3,5-Tris-(4-tert-butyl-3-hydroxy-2,6-dimethylbenzyl)isocyanurat, 2,4,6-Tris-(3,5-di-tert-butyl-4-hydroxyphenylethyl)-1,3,5-triazin, 1,3,5-Tris-(3,5-di-tert-butyl-4-hydroxyphenylpropionyl)-hexahydro-1,3,5-triazin, 1,3,5-Tris-(3,5-dicyclohexyl-4-hydroxybenzyl)-isocyanurat.
11. Benzylphosphonate, z.B. Dimethyl-2,5-di-tert-butyl-4-hydroxybenzylphosphonat, Diethyl-3,5-di-tert-butyl-4-hydroxybenzylphosphonat, Dioctadecyl-3,5-di-tert-butyl-4-hydroxybenzylphosphonat, Dioctadecyl-5-tert-butyl-4-hydroxy-3-methylbenzylphosphonat, Ca-Salz des 3,5-Di-tert-butyl-4-hydroxybenzylphosphonsäure-monoethylesters.
12. Acylaminophenole, z.B. 4-Hydroxy-laurinsäureanilid, 4-Hydroxystearinsäureanilid, N-(3,5-di-tert-butyl-4-hydroxyphenyl)-carbaminsäureoctylester.
13. Ester der β-(3,5-Di-tert-butyl-4-hydroxyphenyl)-propionsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxyethyl)-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
14. Ester der β-(5-tert-Butyl-4-hydroxy-3-methylphenyl)-propionsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
15. Ester der β-(3,5-Dicyclohexyl-4-hydroxyphenyl)-propionsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
16. Ester der 3,5-Di-tert-butyl-4-hydroxyphenylessigsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
17. Amide der β-(3,5-Di-tert-butyl-4-hydroxyphenyl)-propionsäure, wie z.B. N,N'-Bis-(3,5-di-tert-butyl-4-hydroxyphenylpropionyl)-hexamethylendiamin, N,N'-Bis-(3,5-di-tert-butyl-4-hydroxyphenylpropionyl)-trimethylendiamin, N,N'-Bis-(3,5-di-tert-butyl-4-hydroxyphenylpropionyl)-hydrazin.

Gegebenenfalls kann auch ein Gemisch von Antioxidantien unterschiedlicher Struktur eingesetzt werden.

Die Antioxidantien können in einer Menge von beispielsweise 0,01 bis 10, zweckmäßig 0,05 bis 10 und insbesondere 0,05 bis 5 Gew.-Teilen, bezogen auf 100 Gew.-Teile PVC, angewandt werden.

**UV-Absorber und Lichtschutzmittel:** Beispiele dafür sind:
1.2-(2'-Hydroxyphenyl)-benzotriazole, wie z.B. 2-(2'-Hydroxy-5'-methylphenyl)-benzotriazol, 2-(3',5'-Di-tert-butyl-2'-hydroxyphenyl)-benzotriazol, 2-(5'-tert-Butyl-2'-hydroxyphenyl)-benzotriazol, 2-(2'-Hydroxy-5'-(1,1,3,3-tetramethylbutyl)phenyl)-benzotriazol, 2-(3',5'-Di-tert-butyl-2'-hydroxyphenyl)-5-chlor-benzotriazol, 2-(3'-tert-Butyl-2'-hydroxy-5'-methylphenyl)-5-chlor-benzotriazol, 2-(3'-sec-Butyl-5'-tert-butyl-2'-hydroxyphenyl)-benzotriazol, 2-(2'-Hydroxy-4'-octoxyphenyl)-benzotriazol, 2-(3',5'-Di-tert-amyl-2'-hydroxyphenyl)-benzotriazol, 2-(3',5'-Bis-(α,α-dimethylbenzyl)-2'-hydroxyphenyl)-benzotriazol, Mischung aus 2-(3'-tert-Butyl-2'-hydroxy-5'-(2-octyloxycarbonylethyl)phenyl)-5-chlor-benzotriazol, 2-(3'-tert-Butyl-5'-[2-(2-ethylhexyloxy)-carbonylethyl]-2'-hydroxyphenyl)-5-chlor-benzotriazol, 2-(3'-tert-Butyl-2'-hydroxy-5'-(2-methoxycarbonylethyl)phenyl)-5-chlor-benzotriazol, 2-(3'-tert-Butyl-2'-hydroxy-5'-(2-methoxycarbonylethyl)phenyl)-benzotriazol, 2-(3'-tert-Butyl-2'-hydroxy-5'-(2-octyloxycarbonylethyl)phenyl)-benzotriazol, 2-(3'-tert-Butyl-5'-[2-(2-ethylhexyloxy)carbonylethyl]-2'-hydroxyphenyl)-benzotriazol, 2-(3'-Dodecyl-2'-hydroxy-5'-methylphenyl)-benzotriazol, und 2-(3'-tert-Butyl-2'-hydroxy-5'-(2-isooctyloxycarbonylethyl)phenyl-benzotriazol, 2,2'-Methylen-bis[4-(1,1,3,3-tetramethylbutyl)-6-benzotriazol-2-yl-phenol]; Umesterungsprodukt von 2-[3'-tert-Butyl-5'-(2-methoxycarbonylethyl)-2'-hydroxy-phenyl]-benzotriazol mit Polyethylenglycol 300; 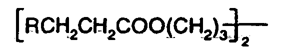 mit R = 3'-tert-Butyl-4'-hydroxy-5'-2H-benzotriazol-2-yl-phenyl.
2. 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.
3. Ester von gegebenenfalls substituierten Benzoesäuren, wie z.B. 4-tert-Butylphenyl-salicylat, Phenylsalicylat, Octylphenyl-salicylat, Dibenzoylresorcin, Bis-(4-tert-butylbenzoyl)-resorcin, Benzoylresorcin, 3,5-Di-tert-butyl-4-hydroxybenzoesäure-2,4-di-tert-butylphenylester, 3,5-Di-tert-butyl-4-hydroxybenzoesäurehexadecylester, 3,5-Di-tert-butyl-4-hydroxybenzoesäureoctadecylester, 3,5-Di-tert-butyl-4-hydroxybenzoesäure-2-methyl-4,6-di-tert-butylphenylester.
4. Acrylate, wie z.B. α-Cyan-β,β-diphenylacrylsäure-ethylester bzw. - isooctylester, α-Carbomethoxy-zimtsäuremethylester, α-Cyano-β-methyl-p-methoxyzimtsäuremethylester bzw. -butylester, α-Carbomethoxy-p-methoxy-zimtsäuremethylester, N-(β-Carbomethoxy-β-cyanovinyl)-2-methyl-indolin.
5. Nickelverbindungen, wie z.B. Nickelkomplexe des 2,2'-Thio-bis-[4-(1,1,3,3-tetra-methylbutyl)-phenols], wie der 1:1- oder der 1:2-Komplex, gegebenenfalls mit zusätzlichen Liganden, wie n-Butylamin, Triethanolamin oder N-Cyclohexyldiethanolamin, Nickeldibutyldithiocarbamat, Nickelsalze von 4-Hydroxy-3,5-di-tert-butylbenzyl phosphonsäure-monoalkylestern, wie vom Methyl- oder Ethylester, Nickelkomplexe von Ketoximen, wie von 2-Hydroxy-4-methyl-phenyl-undecylketoxim, Nickelkomplexe des 1-Phenyl-4-lauroyl-5-hydroxy-pyrazols, gegebenenfalls mit zusätzlichen Liganden.
6. Sterisch gehinderte Amine, wie z.B. Bis-(2,2,6,6-tetramethyl-piperidyl)-sebacat, Bis-(2,2,6,6-tetramethyl-piperidyl)-succinat, Bis-(1,2,2,6,6-pentamethylpiperidyl)-sebacat, n-Butyl-3,5-di-tert-butyl-4-hydroxybenzylmalonsäure-bis(1,2,2,6,6-pentamethylpiperidyl) ester, Kondensationsprodukt aus 1-Hydroxyethyl-2,2,6,6-tetramethyl-4-hydroxy-piperidin und Bernsteinsäure, Kondensationsprodukt aus N,N'-Bis-(2,2,6,6-Tetramethyl-4-piperidyl)-hexamethylendiamin und 4-tert-Octylamino-2,6-dichlor-1,3,5-s-triazin, Tris-(2,2,6,6-tetramethyl-4-piperidyl)-nitrilotriacetat, Tetrakis-(2,2,6,6-tetramethyl-4-piperidyl)-1,2,3,4-butantetraoat, 1,1'-(1,2-Ethandiyl)-bis-(3,3,5,5-tetramethyl-piperazinon), 4-Benzoyl-2,2,6,6-tetramethylpiperidin, 4-Stearyloxy-2,2,6,6-tetramethylpiperidin, Bis-(1,2,2,6,6-pentamethylpiperidyl)-2-n-butyl-2-(2-hydroxy-3,5-di-tert-butylbenzyl)-malonat, 3-n-Octyl-7,7,9,9-tetramethyl-1,3,8-triazaspiro[4.5]decan-2,4-dion, Bis-(1-octyloxy-2,2,6,6-tetramethylpiperidyl)-sebacat, Bis-(1-octyloxy-2,2,6,6-tetramethylpiperidyl)-succinat, Kondensationsprodukt aus N,N'-Bis-(2,2,6,6-tetramethyl-4-piperidyl)-hexamethylendiamin und 4-Morpholino-2,6-dichlor-1,3,5-triazin, Kondensationsprodukt aus 2-Chlor-4,6-di-(4-n-butylamino-2,2,6,6-tetramethylpiperidyl)-1,3,5-triazin und 1,2-Bis-(3-aminopropylamino)äthan, Kondensationsprodukt aus 2-Chlor-4,6-di-(4-n-butylamino-1,2,2,6,6-pentamethylpiperidyl)-1 ,3,5-triazin und 1,2-Bis-(3-aminopropylamino)-äthan, 8-Acetyl-3-dodecyl-7,7,9,9-tetramethyl-1,3,8-triazaspiro[4.5]de can-2,4-dion, 3-Dodecyl-1-(2,2,6,6-tetramethyl-4-piperidyl)pyrrolidin-2,5-dion, 3-Dodecyl-1-(1,2,2,6,6-pentamethyl-4-piperidyl)-pyrrolidin-2,5-dion.
7. Oxalsäurediamide, wie z.B. 4,4'-Di-octyloxy-oxanilid, 2,2'-Diethoxy-oxanilid, 2,2'-Di-octyloxy-5,5'-di-tert-butyl-oxanilid, 2,2'-Di-dodecyloxy-5,5'di-tert-butyl-oxanilid, 2-Ethoxy-2'-ethyl-oxanilid, N,N'-Bis-(3-dimethylaminopropyl)-oxalamid, 2-Ethoxy-5-tert-butyl-2'-ethyloxanilid und dessen Gemisch mit 2-Ethoxy-2'-ethyl-5,4'-di-tert-butyloxanilid, Gemische von o- und p-Methoxy- sowie von o- und p-Ethoxy-disubstituierten Oxaniliden.
8. 2-(2-Hydroxyphenyl)-1,3,5-triazine, wie z.B. 2,4,6-Tris(2-hydroxy-4-octyloxyphenyl)-1,3,5-triazin, 2-(2-Hydroxy-4-octyloxyphenyl)-4,6-bis-(2,4-dimethylphenyl)-1,3,5-triazin, 2-(2,4-Dihydroxyphenyl)-4,6-bis(2,4-dimethylphenyl)-1,3,5-triazin, 2,4-Bis(2-hydroxy-4-propoxyphenyl)-6-(2,4-dimethylphenyl)-1,3,5-triazin, 2-(2-Hydroxy-4-octyloxyphenyl)-4,6-bis(4-methylphenyl)-1,3,5-triazin, 2-(2-Hydroxy-4-dodecyloxyphenyl)-4,6-bis(2,4-dimethylphenyl)-1,3,5-triazin, 2-[2-Hydroxy-4-(2-hydroxy-3-butyloxy-propyloxy)phenyl]-4,6-bis(2,4-dimethyl phenyl)-1,3,5-triazin, 2-[2-Hydroxy-4-(2-hydroxy-3-octyloxy-propoxy)phenyl]-4,6-bis(2,4-dimethylphenyl)-1,3,5-triazin.

Bevorzugt wird die erfindungsgemäße Stabilisatormischung mit Alkali- oder Erdalkalicarboxylaten, besonders Calciumcarboxylaten, mit Aluminiumcarboxylaten, mit 1,3-Dicarbonylverbindungen, mit Dihydropyridinen, mit Phosphiten oder Kombinationen dieser Stoffe.

**Weichmacher:** Als organische Weichmacher kommen beispielsweise solche aus den folgenden Gruppen in Betracht:
A) Phthalsäureester:
   Beispiele für solche Weichmacher sind Dimethyl-, Diethyl-, Dibutyl-, Dihexyl-, Di-2-ethylhexyl-, Di-n-octyl-, Di-iso-octyl-, Di-iso-nonyl-, Di-iso-decyl, Di-iso-tridecyl-, Dicyclohexyl-, Di-methylcyclohexyl-, Dimethylglycol-, Dibutylglycol-, Benzylbutyl- und Diphenyl-phthalat sowie Mischungen von Phthalaten wie C₇₋₉- und C₉₋₁₁-Alkylphthalate aus überwiegend linearen Alkoholen, C₆₋₁₀-n-Alkylphthalate und C₈₋₁₀-n-Alkylphthalate. Bevorzugt sind davon Dibutyl-, Dihexyl-, Di-2-ethylhexyl-, Di-n-octyl-, Di-iso-octyl-, Di-iso-nonyl-, Di-iso-decyl-, Di-iso-tridecyl- und Benzylbutylphthalat sowie die genannten Mischungen von Alkylphthalaten. Besonders bevorzugt sind Di-2-ethylhexyl-, Di-iso-nonyl- und Di-iso-decylphthalat, die auch unter den gebräuchlichen Abkürzungen DOP (Dioctylphthalat, Di-2-ethylhexyl--phthalat), DINP (Diisononylphthalat), DIDP (Diisodecylphthalat) bekannt sind.
B) Ester aliphatischer Dicarbonsäuren, insbesondere Ester von Adipin-, Azelain- und Sebazinsäure
   Beispiele für solche Weichmacher sind Di-2-ethylhexyladipat, Di-isooctyladipat (Gemisch), Di-iso-nonyladipat (Gemisch), Di-iso-decyladipat (Gemisch), Benzylbutyladipat, Benzyloctyladipat, Di-2-ethylhexylazelat, Di-2-ethylhexylsebacat und Di-iso-decylsebacat (Gemisch). Bevorzugt sind Di-2-ethylhexyladipat und Di-isooctyladipat.
C) Trimellithsäureester,
   beispielsweise Tri-2-ethylhexyltrimellithat, Tri-iso-decyltrimellithat (Gemisch), Tri-isotridecyltrimellithat, Tri-iso-octyltrimellithat (Gemisch) sowie Tri-C₆₋₈-alkyl, Tri-C₆₋₁₀-alkyl-, Tri-C₇₋₉-alkyl- und Tri-C₉₋₁₁-alkyl-trimellithate. Die letztgenannten Trimellithate entstehen durch Veresterung der Trimellithsäure mit den entsprechenden Alkanolgemischen. Bevorzugte Trimellithate sind Tri-2-ethylhexyltrimellithat und die genannten Trimellithate aus Alkanolgemischen. Gebräuchliche Abkürzungen sind TOTM (Trioctyltrimellitat, Tri-2-ethylhexyl-trimellitat), TIDTM (Triisodecyltrimellitat) und TITDTM (Triisotridecyltrimellitat).
D) Epoxyweichmacher
   In der Hauptsache sind das epoxidierte ungesättigte Fettsäuren wie z.B. epoxidiertes Sojabohnenöl.
E) Polymerweichmacher
   Die gebräuchlichsten Ausgangsmaterialien für die Herstellung der Polyesterweichmacher sind: Dicarbonsäuren wie Adipin-, Phthal-, Azelain- und Sebacinsäure; Diole wie 1,2-Propandiol, 1,3-Butandiol, 1,4-Butandiol, 1,6-Hexandiol, Neopentylglycol und Diethylenglykol.
F) Phosphorsäureester
   Beispiele für solche Phosphorsäureester sind Tributylphosphat, Tri-2-ethylbutylphosphat, Tri-2-ethylhexylphosphat, Trichlorethylphosphat, 2-Ethyl-hexyldi-phenylphosphat, Kresyldiphenylphosphat, Triphenylphosphat, Trikresylphosphat und Trixylenylphosphat. Bevorzugt sind Tri-2-ethylhexyl-phosphat sowie ®Reofos 50 und 95 (ex. Fa. FMC).
G) Chlorierte Kohlenwasserstoffe (Paraffine)
H) Kohlenwasserstoffe
I) Monoester, z.B. Butyloleat, Phenoxyethyloleat, Tetrahydrofurfuryloleat und Alkylsulfonsäureester.
J) Glykolester, z.B. Diglykolbenzoate.

Definitionen und Beispiele für Weichmacher der Gruppen A) bis J) sind den folgenden Handbüchern zu entnehmen:

"Taschenbuch der Kunststoffadditive", Herausgeber R. Gächter und H. Müller, Carl Hanser Verlag, 1989, Kapitel 5 S 341-442.

"PVC Technology", Herausgeber W.V. Titow, 4th. Ed., Elsevier Publishers, 1984, Kapitel 6. Seiten 147-180.

Es können auch Mischungen unterschiedlicher Weichmacher verwandt werden.

Die Weichmacher können in einer Menge von beispielsweise 5 bis 120, zweckmäßig 10 bis 100, Gew.-Teilen, bezogen auf 100 Gew.-Teile PVC, angewandt werden.

Als **Gleitmittel** kommen beispielsweise in Betracht: Montanwachs, Fettsäureester, PE-Wachse, Amidwachse, Chlorparaffine, Glycerinester oder Erdalkaliseifen bzw. Gleitmittel auf Silikonbasis wie in EP 225261 beschrieben. Verwendbare Gleitmittel sind auch in "Taschenbuch der Kunststoffadditive", Herausgeber R. Gächter und H. Müller, Carl Hanser Verlag, 3.Auflage, 1989, Seiten 478-488 beschrieben.

**Füllstoffe:** Füllstoffe ("Handbook of PVC-Formulating" von E. J. Wickson, John Wiley & Sons, New York 1993S.393-449) und Verstärkungsmittel ("Taschenbuch der Kunststoffadditive", Herausgeber R. Gächter und H. Müller, Carl Hanser Verlag, 3.Auflage, 1989, Seiten 549-615) können z.B. sein: Calciumcarbonat, Dolomit, Wollastonit, Magnesiumoxid, Magnesium hydroxid, Silikate, Glasfasern, Talk, Kaolin, Kreide, Glimmer, Metalloxide und -hydroxide, Ruß oder Graphit. Bevorzugt ist Kreide.

**Pigmente:** Geeignete Stoffe sind dem Fachmann bekannt. Beispiele für anorganische Pigmente sind TiO₂, Ruß, Fe₂O₃, Sb₂O₃, (Ti,Ba,Sb)O₂, Cr₂O₃, Spinelle wie Cobaltblau und Cobaltgrün, Cd(S,Se), Ultramarinblau. Bevorzugt ist TiO₂, auch in mikronisierter Form. Organische Pigmente sind z.B. Azopigmente, Phthalocyaninpigmente, Chinacridonpigmente, Perylenpigmente, Pyrrolopyrrolpigmente und Anthrachinonpigmente. Weitere Einzelheiten sind in "Handbook of PVC Formulating", E.J. Wickson, John Wiley & Sons, New York 1993, S. 449 - 474, zu finden.

**Treibmittel:** Treibmittel sind organische Azo- und Hydrazoverbindungen, Tetrazole, Oxazine, Isatosäureanhydrid, sowie Soda und Natriumbicarbonat. Bevorzugt sind Azodicarbonamid und Natriumbicarbonat sowie deren Mischungen.

Definitionen und Beispiele für die nicht näher aufgeführten Hilfs- und Zusatzstoffe sind den im Text genannten Handbüchern zu entnehmen.

Beispiele für die zu stabilisierenden **chlorhaltigen Polymere** oder deren Recyclate sind: Polymere des Vinylchlorides, Vinylharze, enthaltend Vinylchlorideinheiten in deren Struktur, wie Copolymere des Vinylchlorids und Vinylester von aliphatischen Säuren, insbesondere Vinylacetat, Copolymere des Vinylchlorids mit Estern der Acryl- und Methacrylsäure und mit Acrylnitril, Copolymere des Vinylchlorids mit Dienverbindungen und ungesättigten Dicarbonsäuren oder deren Anhydride, wie Copolymere des Vinylchlorids mit Diethylmaleat, Diethylfumarat oder Maleinsäureanhydrid, nachchlorierte Polymere und Copolymere des Vinylchlorids, Copolymere des Vinylchlorids und Vinylidenchlorids mit ungesättigten Aldehyden, Ketonen und anderen, wie Acrolein, Crotonaldehyd, Vinylmethylketon, Vinylmethylether, Vinylisobutylether und ähnliche; Polymere des Vinylidenchlorids und Copolymere desselben mit Vinylchlorid und anderen polymerisierbaren Verbindungen; Polymere des Vinylchloracetates und Dichlordivinylethers; chlorierte Polymere des Vinylacetates, chlorierte polymerische Ester der Acrylsäure und der alpha-substituierten Acrylsäure; Polymere von chlorierten Styrolen, zum Beispiel Dichlorstyrol; chlorierte Gummis; chlorierte Polymere des Ethylens; Polymere und nachchlorierte Polymere von Chlorbutadiens und deren Copolymere mit Vinylchlorid, Gummi-Hydrochlorid und chloriertes Gummi-Hydrochlorid; sowie Mischungen der genannten Polymere unter sich oder mit anderen polymerisierbaren Verbindungen.

Ferner sind umfaßt die Pfropfpolymerisate von PVC mit EVA, ABS und MBS. Bevorzugte Substrate sind auch Mischungen der vorstehend genannten Homo-und Copolymerisate, insbesondere Vinylchlorid-Homopolymerisate, mit anderen thermoplastischen oder/und elastomeren Polymeren, insbesondere Blends mit ABS, MBS, NBR, SAN, EVA, CPE, MBAS, PMA, PMMA, EPDM und Polylactonen.

Weiterhin bevorzugt sind Suspensions- und Massepolymere, sowie Emulsionspolymere.

Als chlorhaltiges Polymerisat ist Polyvinylchlorid besonders bevorzugt, insbesondere Suspensionspolymerisat und Massepolymerisat.

Im Rahmen dieser Erfindung sind unter PVC auch Copolymerisate oder Pfropfpolymerisate von PVC mit polymerisierbaren Verbindungen wie Acrylnitril, Vinylacetat oder ABS zu verstehen, wobei es sich um Suspensions-, Masse- oder Emulsionspolymerisate handeln kann. Bevorzugt ist PVC Homopolymer auch in Kombination mit Polyacrylaten.

Weiterhin kommen zur Stabilisierung im Rahmen dieser Erfindung auch insbesondere Recyclate chlorhaltiger Polymere in Frage, wobei es sich hierbei um die oben näher beschriebenen Polymere handelt, welche durch Verarbeitung, Gebrauch oder Lagerung eine Schädigung erfahren haben. Besonders bevorzugt ist PVC-Recyclat. In den Recyclaten können auch kleine Mengen an Fremdstoffen enthalten sein, wie z.B. Papier, Pigmente, Klebstoffe, die oft schwierig zu entfernen sind. Diese Fremdstoffe können auch aus dem Kontakt mit diversen Stoffen während des Gebrauchs oder der Aufarbeitung stammen, z.B. Treibstoffreste, Lackanteile, Metallspuren und Initiatorreste.

Die Erfindung betrifft auch ein Verfahren zur Stabilisierung chlorhaltiger Polymere, bei dem man diesen die erfindungsgemäße Stabilisatorkombination zufügt und die Komponenten in dafür geeigneten Apparaturen innig vermischt.

Zweckmäßig kann die Einarbeitung der Stabilisatoren nach folgenden Methoden erfolgen:
- als Emulsion oder Dispersion (Eine Möglichkeit ist z.B. die Form einer pastösen Mischung. Ein Vorteil der erfindungsgemäßen Kombination besteht bei dieser Darreichungsform in der Stabilität der Paste.);
- Als Trockenmischung während des Vermischens von Zusatzkomponenten oder Polymermischungen;
- durch direktes Zugeben in die Verarbeitungsapparatur (z.B. Kalander, Mischer, Kneter, Extruder und dergleichen) oder
- als Lösung oder Schmelze.

Das erfindungsgemäß stabilisierte PVC, das die Erfindung ebenfalls betrifft, kann auf an sich bekannte Weise hergestellt werden, wozu man unter Verwendung an sich bekannter Vorrichtungen wie der oben genannten Verarbeitungsapparaturen die erfindungsgemäße Stabilisatorkombination und gegebenenfalls weitere Zusätze mit dem PVC vermischt. Hierbei können die Stabilisatoren einzeln oder in Mischung zugegeben werden oder auch in Form sogenannter Masterbatches.

Die Erfindung betrifft somit auch ein Verfahren zur Herstellung von stabilisiertem PVC bei dem man unter Verwendung von Vorrichtungen, wie Kalandern, Mischern, Knetern, Extrudern und dergleichen, die vorstehend beschriebenen Komponenten und gegebenenfalls weitere Zusätze mit dem PVC vermischt.

Das nach vorliegender Erfindung stabilisierte PVC kann auf bekannte Weisen in die gewünschte Form gebracht werden. Solche Verfahren sind beispielsweise Mahlen, Kalandrieren, Extrudieren, Spritzgießen, Sintern oder Spinnen, ferner Extrusions-Blasen oder eine Verarbeitung nach dem Plastisol-Verfahren. Das stabilisierte PVC kann auch zu Schaumstoffen verarbeitet werden. Setzt man als Treibmittel Azodicarbonamid ein, ist es vorteilhaft, wenn keine 1,3-Diketone zusätzlich verwendet werden.

Das erfindungsgemäß stabilisierte PVC eignet sich z.B. für Halbhart- und Weich-Rezepturen, insbesondere in Form von Weichrezepturen für Drahtummantelungen, Crash pad-Folien (Automobile), Kabelisolierungen, welche besonders bevorzugt ist.

In Form von Halbhart-Rezepturen eignet sich das erfindungsgemäße PVC besonders für Dekorationsfolien, Schaumstoffe, Agrarfolien, Schläuche, Dichtungsprofile und Bürofolien.

In Form von Hart-Rezepturen eignet sich das erfindungsgemäß stabilisierte PVC besonders für Hohlkörper (Flaschen), Verpackungsfolien (Tiefziehfolien), Blasfolien, Rohre, Schaumstoffe, Schwerprofile (Fensterrahmen), Lichtwandprofile, Bauprofile, Sidings, Fittings, Bürofolien und Apparatur-Gehäuse (Computer, Haushaltsgeräte).

Beispiele für die Anwendung des erfindungsgemäßen PVC als Plastisol sind Kunstleder, Bodenbeläge, Textilbeschichtungen, Tapeten, Coil-Coatings und Unterbodenschutz für Kraftfahrzeuge.

Beispiele für Sinter-PVC-Anwendungen des erfindungsgemäß stabilisierten PVC sind Slush, Slush Mould und Coil-Coatings.

Bevorzugt sind PVC-Hartschaumstoffe und PVC-Rohre für Trink- oder Abwasser, Druckrohre, Gasrohre, Kabelkanal- und Kabelschutzrohre, Rohre für Industrieleitungen, Sickerrohe, Abflußrohre, Dachrinnenrohre und Drainagerohre. Näheres hierzu vgl. "Kunststoffhandbuch PVC" Bd. 2/2, W. Becker, H. Braun, 2. Aufl 1985, Carl Hanser Verlag, S. 1235-1277.

Die folgenden **Beispiele** erläutern die Erfindung weiter Teile- und Prozentangaben beziehen sich - wie auch in der übrigen Beschreibung - sofern nicht anders angegeben, auf das Gewicht.

### Beispiel 1: Statischer Hitzetest

Zur Herstellung der Stabilisatoren I bis III wird Zinkstearat mit einem handelsüblichen 1.3-Diketon und weiter mit verschiedenen Anteilen an basischem Aluminumstearat auf einem Taumelmischer über eine Zeit von 1,5 Stunden intensiv gemischt.

| STABILISATOR | I | II | III |
|---|---|---|---|
| Zinkstearat | 0.8 | 0.4 | 0.2 |
| 1.3-Diketon | 0.2 | 0.2 | 0.2 |
| Basisches Al-Stearat | - | 0.4 | 0.6 |

Von diesen Stabilisatormischungen werden jeweils 1.0 Teile mit 100 Teilen S-PVC (K-Wert 70) und 21 Teilen einer Mischung aus Dioctylphthalat und epoxidiertem Sojaöl und einem handelsüblichen flüssigen Aryl-Alkylphosphit vermischt und 5 Minuten bei 190°C auf einem Mischwalzwerk plastifiziert. Aus den so erhaltenen Folien (Stärke 0.2 mm) werden Prüfstreifen geschnitten und in einem Mathis-Thermo-Takter bei 180°C über den in den nachstehenden Tabellen angegebenen Zeitraum thermisch belastet. Anschließend wird der Yellowness Index (YI) nach ASTM-1925-70 bestimmt.

Je niedriger der gefundene Yl-Wert ist, desto wirksamer verhindert das Stabilisatorsystem die Vergilbung und damit die Schädigung des Materials. Die Langzeitthermostabilität des stabilisierten Polymeren ist auch aus dem plötzlichen Einsetzen einer massiven Verfärbung zu erkennen. Ein Stabilisator ist um so wirksamer, je länger diese Verfärbung unter thermischer Belastung verzögert wird , oder je niedriger die Anfangsverfärbung und je besser die Farbhaltung (geringe Mittelverfärbung) ist.

**Tabelle 2:**

| Statischer Hitzetest bei 180°C | | | | | | | |
|---|---|---|---|---|---|---|---|
| Stabilisator | Testdauer (Minuten) | | | | | | Abbruchzeit [min] |
| | 0 | 6 | 12 | 18 | 24 | 30 | |
| I | 5.1 | 5.6 | -------schwarz------- | | | | 11 |
| II | 5.2 | 6.0 | 6.2 | 6.4 | 10.8 | " | 26 |
| III | 8.0 | 8.6 | 9.7 | 11.6 | 13.3 | 15.4 | 67 |

Zur Herstellung der Stabilisatormischungen IV bis IX wird ein Zinkstearat mit einem handelsüblichen 1.3-Diketon und weiter mit basischem Aluminumstearat und eine Amin Verbindungen gemäß Komponente C auf einem Taumelmischer im Verlauf von 1,5 Stunden intensiv gemischt.

| STABILISATOR | IV | V | VI | VII | VIII | IX |
|---|---|---|---|---|---|---|
| Zinkstearat | 0.6 | 0.6 | 0.6 | 0.4 | 0.4 | 0.4 |
| 1.3-Diketon | 0.2 | 0.2 | 0.2 | 0.2 | 0.2 | 0.2 |
| Basisches Al-Stearat | - | 0.2 | 0.2 | - | 0.27 | 0.14 |
| Amin¹⁾ | - | - | 0.15 | 0.15 | 0.15 | 0.15 |
| Ca-Stearat | - | - | - | 0.4 | - | 0.2 |

| | | | | | | |
|---|---|---|---|---|---|---|
| ¹⁾ sterisch gehindertes Amin (Verbindung 87, s. oben) | | | | | | |

Von diesen Stabilisatormischungen werden jeweils 0,8 bis 1.1 Teile mit 100 Teilen S-PVC (K-Wert 70) und 21 Teilen einer Mischung aus Dioctylphthalat epoxidiertem Sojabohnenenöl und einem handelsüblichen flüssigen Aryl-Alkylphosphit vermischt und 5 Minuten bei 190°C auf einem Mischwalzwerk plastifiziert. Aus der so erhaltenen Folie werden Prüfmuster geschnitten und in einem Mathis-Thermotakter bei 180 °C thermisch belastet.

Anschließend wird der Yellowness Index nach ASTM 1925-70 gemessen.

**Tabelle 3:**

| Stabilisator | Testdauer (Minuten) | | | | | | Abbruchzeit (Minuten) |
|---|---|---|---|---|---|---|---|
| | 0 | 6 | 12 | 18 | 24 | 30 | |
| IV | 5.2 | 5.4 | 6.1 | -------schwarz------- | | | 13 |
| V | 5.6 | 6.2 | 6.0 | 13.5 | " | " | 18 |
| VI | 6.8 | 6.9 | 7.7 | 8.1 | 8.2 | 9.2 | 55 |
| VII | 6.5 | 7.3 | 7.8 | 8.9 | 9.5 | 11.0 | >78 |
| VIII | 7.1 | 8.5 | 9.1 | 9.5 | 10.4 | 11.3 | >78 |
| IX | 5.9 | 6.2 | 6.1 | 6.3 | 6.6 | 6.9 | >78 |

## Patentansprüche

1. Stabilisatorkombination enthaltend
A) mindestens eine Zink-Verbindung der Formel I;
Zn (R¹ R²) (I)
B) mindestens eine Metall-Verbindung der Formel II,
Me ⁿ⁺ (R³ ₐ R⁴ _{b} R⁵ _{c}) (II)
worin Me: Al oder Mg ist,
a, b und c die Werte 0, 1, 2 oder 3 annehmen,
n = a + b + c ist und n die Werte 2 oder 3 annehmen kann und mindestens ein Rest R¹ bis R⁵ unabhängig voneinander C₁-C₂₂-Carboxylate, C₂-C₂₁-Alkenyl-CO₂-, Phenyl-CO₂-, Naphthyl-CO₂-, C₅-C₁₂-Cycloalkyl-CO₂, C₇-C₁₈-Alkylphenyl-CO₂-, C₇-C₁₈-Alkylphenyl-O-, C₇-C₉ -Phenylalkyl-CO₂-, C₁-C₂₁-Alkyl-O-, R⁸-O-CO-[CH₂]_{P}-S- oder ein Rest der Formel R⁶-CO-CH=CR⁷-O^{⊖}- sind und Cl- oder HO- sein können, wobei der oben genannte Alkyl- oder Alkenylrest verzweigt, ein- oder mehrfach durch Sauerstoff unterbrochen oder durch eine oder mehrere OH-Gruppen substituiert sein kann, und der obengenannte Phenylrest durch eine oder mehrere Methyl-, Ethyl-, Propyl-, Butyl- und/oder OH-Gruppen substituiert sein kann,
R₆ und R₇ C₁-C₈-Alkyl-, C₁-C₈-Alkenyl-, C₅-C₈-Cycloalkyl-, Benzyl- oder Phenylsind,
p : 1 bis 6 ist und
R₈ gegebenenfalls durch Sauerstoff unterbrochenes C₄-C₂₂-Alkyl darstellt; sowie
C) mindestens einem sterisch gehinderten Amin, enthaltend die Gruppe 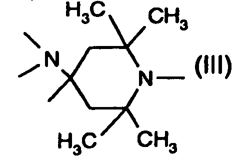 und/oder 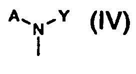 worin A und Y unabhängig voneinander C₁₋₈ -Alkyl-, C₃₋₈ Alkenyl-, C₅₋₈ -Cycloalkyl-, oder C₇₋₉ -Phenylalkyl- sind oder zusammen gegebenenfalls durch O, NH oder CH₃-N unterbrochenes C₂₋₅ -Alkylen bilden.

2. Stabilisatorkombination gemäß Anspruch **1**, enthaltend mindestens eine Verbindung der Formel I mit einer Zn-O-Bindung und mindestens eine Verbindung der Formel II, worin wenigstens ein Rest R₁ bis R₅ C₁-C₂₂ Carboxylat oder Acetylacetonat ist und die anderen Reste C₁-C₂₂ Carboxylat, Acetylacetonat oder HO- sind.

3. Stabilisatorkombination gemäß Anspruch **1**, enthaltend zusätzlich mindestens ein Calciumcarboxylat.

4. Stabilisatorkombination gemäß Anspruch **1**, enthaltend zusätzlich mindestens ein Phosphit.

5. Stabilisatorkombination gemäß Anspruch **1**, enthaltend zusätzlich mindestens einem epoxidierten Fettsäureester.

6. Stabilisatorkombination gemäß Anspruch **1**, enthaltend zusätzlich mindestens ein Polyol.

7. Stabilisatorkombination gemäß Anspruch **1**, enthaltend zusätzlich mindestens eine Verbindung aus der Gruppe der Perchlorat-Salze, Epoxide und epoxidierte Fettsäureester, Phosphite, Thiophosphite und Thiophosphate; Polyole; 1,3-Dicarbonylverbindungen; Mercaptocarbonsäureester; Antioxidantien; Lichtschutzmittel und UV-Absorber; Alkali- und Erdalkaliverbindungen; Dihydropyridine, Zeolithe, Hydrotalcite, sowie der Dawsonite.

8. Stabilisatorkombination gemäß Anspruch **1**, enthaltend zusätzlich mindestens ein(en) Antioxidans, Lichtschutzmittel, UV-Absorber, Weichmacher, Füllstoff, Pigment oder Gleitmittel.

9. Zusammensetzung enthaltend ein organisches Material und eine Stabilisatorkombination gemäß Anspruch 1.

10. Zusammensetzung gemäß Anspruch **9**, worin das organische Material ein chlorhaltiges Polymer ist.

11. Zusammensetzung gemäß Anspruch **10**, worin das chlorhaltige Polymer PVC ist.

12. Verfahren zur Stabilisierung chlorhaltiger Polymere, **dadurch gekennzeichnet, daß** in die chlorhaltigen Polymere eine Stabilisatorkombination gemäß Anspruch 1 eingearbeitet wird.

13. Verfahren nach Anspruch **12**, **dadurch gekennzeichnet, dass** in stabilisierten Polymeren die Komponenten A) und B) jeweils zu 0,01 bis 10 Gew.-% und die Komponente C) zu 0,005 bis 5 Gew.-% vorhanden sind.

## Claims

1. Stabilizer combination comprising
A) at least one zinc compound of the formula I
Zn (R¹R²) (I)
and
B) at least one metal compound of the formula II
Meⁿ⁺(R³ ₐ R⁴ _{b} R⁵ _{c}) (II)
in which Me is Al or Mg,
a, b and c are 0, 1, 2 or 3,
n = a + b + c and can be 2 or 3, and at least one radical R¹ to R⁵ independently of one another are C₁-C₂₂ carboxylates, C₂-C₂₁-alkenyl-CO₂-, phenyl-CO₂-, naphthyl-CO₂-, C₅-C₁₂-cycloalkyl-CO₂-, C₇-C₁₈-alkylphenyl-CO₂-, C₇-C₁₈-alkylphenyl-O-, C₇-C₉-phenylalkyl-CO₂-, C₁-C₂₁-alkyl-O-, R⁸-O-CO-[CH₂]ₚ-S- or a radical of the formula R⁶-CO-CH=CR⁷-O^{⊖}- and can be Cl- or HO-, where the abovementioned alkyl or alkenyl radical can be branched, interrupted one or more times by oxygen or substituted by one or more OH groups, and the abovementioned phenyl radical can be substituted by one or more methyl, ethyl, propyl, butyl and/or OH groups,
R⁶ and R⁷ are C₁-C₈-alkyl-, C₁-C₈-alkenyl-, C₅-C₈-cycloalkyl-, benzyl- or phenyl-,
p is 1 to 6, and
R⁸ is C₄-C₂₂-alkyl that is uninterrupted or interrupted by oxygen, and
C) at least one sterically hindered amine comprising the group 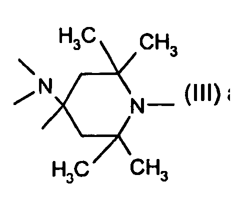 and/or 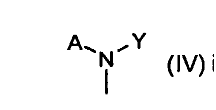 in which A and Y independently of one another are C₁₋₈-alkyl-, C₃₋₈-alkenyl-, C₅₋₈-cycloalkyl-, or C₇₋₉-phenylalkyl- or together are C₂₋₅-alkylene that is uninterrupted or interrupted by O, NH or CH₃-N.

2. Stabilizer combination according to Claim **1**, comprising at least one compound of the formula I having a Zn-O bond and at least one compound of the formula II in which at least one radical R₁ to R₅ is C₁-C₂₂ carboxylate or acetylacetonate and the other radicals are C,-C₂₂ carboxylate, acetylacetonate or HO-.

3. Stabilizer combination according to Claim **1**, additionally comprising at least one calcium carboxylate.

4. Stabilizer combination according to Claim **1**, additionally comprising at least one phosphite.

5. Stabilizer combination according to Claim **1**, additionally comprising at least one epoxidized fatty acid ester.

6. Stabilizer combination according to Claim **1**, additionally comprising at least one polyol.

7. Stabilizer combination according to Claim **1**, additionally comprising at least one compound from the group consisting of the perchlorate salts, epoxides and epoxidized fatty acid esters, phosphites, thiophosphites and thiophosphates; polyols; 1,3-dicarbonyl compounds; mercaptocarboxylates; antioxidants; light stabilizers and UV absorbers; alkali metal and alkaline earth metal compounds; dihydropyridines, zeolites, hydrotalcites, and dawsonites.

8. Stabilizer combination according to Claim **1**, additionally comprising at least one antioxidant, light stabilizer, UV absorber, plasticizer, filler, pigment or lubricant.

9. Composition comprising an organic material and a stabilizer combination according to Claim 1.

10. Composition according to Claim **9**, in which the organic material is a chlorine-containing polymer.

11. Composition according to Claim **10**, in which the chlorine-containing polymer is PVC.

12. Method of stabilizing chlorine-containing polymers, **characterized in that** a stabilizer combination according to Claim **1** is incorporated into the chlorine-containing polymers.

13. Method according to Claim **12**, **characterized in that** the amount of each of components A) and B) in the stabilized polymers is from 0.01 to 10% by weight and the amount of component C) is from 0.005 to 5% by weight.

## Revendications

1. Combinaison de stabilisant contenant:
A) au moins un composé à base de zinc présentant la formule I;
Zn(R¹R²) (I)
B) au moins un composé à base de métal présentant la formule II ,
Meⁿ⁺ (R³ ₐR⁴ _{b}R⁵ _{c}) (II)
dans laquelle:
- Me est Al ou Mg,
- a, b et c présentent les valeurs 0, 1, 2 ou 3,
- n = a + b + c et peut prendre les valeurs 2 ou 3,
- et au moins un des restes R¹ à R⁵, indépendamment les uns des autres, est un groupe carboxylate en C₁-C₂₂, (C₂-C₂₁-alkényl)-CO₂-, phényl-CO₂-, naphtyl-CO₂-, (C₅-C₁₂-cycloalkyl)-CO₂, (C₇-C₁₈-alkylphényl)-CO₂-, (C₇-C₁₈-alkylphényl)-O-, (C₇-C₉-phénylalkyl)-CO₂-, (C₁-C₂₁-alkyl)-O-, R⁸-O-CO-[CH₂]ₚ-S- ou est encore un reste présentant la formule R⁶-CO-CH=CR⁷-O⁸- ou encore Cl ou OH, le reste alkyle ou alkényle précité pouvant être ramifié, coupé une ou plusieurs fois par des atomes d'oxygène ou substitué par un ou plusieurs groupes OH et le reste phényle précité pouvant être substitué par un ou plusieurs radicaux méthyle, éthyle, propyle, butyle et/ou groupe OH,
. R₆ et R₇ sont C₁-C₈-alkyle, C₁-C₆-alcényle, C₅-C₈-cycloalkyle, benzyle ou phényle,
. p = 1 à 6 et,
. R₈ sont éventuellement un radical C₄-C₂₂-alkyle coupé par des atomes d'oxygène ainsi que
C) au moins une amine à encombrement stérique comprenant le groupe 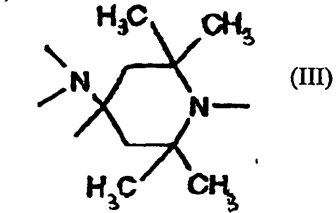 et/ou 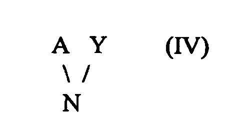 dans lequel A et Y sont, indépendamment l'un de l'autre, des radicaux en C₁-C₈-alkyle, C₃-₈-alcényle, C₅-₈-cycloalkyle, ou C₇-₉-phénylalkyle ou forment un radical C₂-₅ alkyle coupé par des atomes d'oxygène ou des groupes NH ou CH₃-N.

2. Combinaison stabilisante selon la revendication 1, comprenant au moins un composé présentant la formule I, comportant une liaison Zn-O, et au moins un composé de formule II, dans lequel au moins un des restes R₁ à R₅ est un groupe C₁-C₂₂-carboxylate ou acétylacétonate et les autres restes sont des groupes C₁-C₂₂-carboxylate, acétylacétonate ou OH.

3. Combinaison stabilisante selon la revendication 1, contenant en outre au moins un carboxylate de calcium.

4. Combinaison stabilisante selon la revendication 1, contenant en outre au moins un phosphite.

5. Combinaison stabilisante selon la revendication 1, comprenant en outre au moins un ester d'acide gras époxydé.

6. Combinaison stabilisante selon la revendication 1, comprenant en outre au moins un polyol.

7. Combinaison stabilisante selon la revendication 1, contenant en outre au moins un composé choisi dans le groupe formé par les perchlorate, époxyde et ester d'acide gras époxydé, phosphite, thiophosphite et thiophosphate, polyols, dérivés 1,3-dicarbonylique, ester d'acide mercaptocarbonique, antioxydant, agent de protection contre la lumière, agent d'absorption des rayons ultraviolets, composé alcalin ou alcalino-terreux, dihydropyridine, zéolite, hydrotalcite ainsi que dawsonite.

8. Combinaison stabilisante selon la revendication 1, comprenant en outre au moins un antioxydant, agent de protection contre la lumière, agent d'absorption des ultraviolets, adoucisseur, charge, pigment ou adjuvant.

9. Composition contenant un matériau organique et une combinaison stabilisante selon la revendication 1.

10. Composition selon la revendication 9, dans laquelle la matière organique est un polymère contenant du chlore.

11. Composition selon la revendication 10, dans laquelle la matière contenant du chlore est du PVC.

12. Procédé de stabilisation de polymère contenant du chlore **caractérisé en ce que** le polymère contenant du chlore est mis sous forme d'une combinaison stabilisante selon la revendication 1.

13. Procédé selon la revendication 12, **caractérisé en ce que** dans le polymère stabilisé les composants A) et B) sont employés en des proportions de 0,01 à 10 % en poids et le composant C) est employé en une proportion comprise entre 0,005 et 5 % en poids.
